(19) Europäisches Patentamt
European Patent Office
Office européen des brevets

(11) Publication number: **0 085 438**
**B1**

(12) **EUROPEAN PATENT SPECIFICATION**

(45) Date of publication of patent specification: **07.01.87**

(51) Int. Cl.⁴: **C 08 L 25/08,** C 08 L 51/06, C 08 L 71/04 // C08K3/08, C08K5/02

(21) Application number: **83101032.7**

(22) Date of filing: **03.02.83**

(54) **Styrene-based resin composition.**

(30) Priority: **03.02.82 JP 14773/82**
**05.02.82 JP 16344/82**
**07.05.82 JP 75118/82**
**10.05.82 JP 76573/82**

(43) Date of publication of application:
**10.08.83 Bulletin 83/32**

(45) Publication of the grant of the patent:
**07.01.87 Bulletin 87/02**

(84) Designated Contracting States:
**BE DE FR GB IT NL**

(56) References cited:
**EP-A-0 077 059**
**US-A-3 767 613**
**US-A-4 234 469**

(73) Proprietor: **SHOWA DENKO K.K.**
**13-9, Shiba Daimon 1-chome**
**Minato-ku, Tokyo 105 (JP)**

(72) Inventor: **Maeda, Mashahiko**
**No. 16-13-211, Megurohoncho 1-chome**
**Meguro-ku Tokyo (JP)**
Inventor: **Kenji, Fujitani**
**Showa Denko Shataku 247, No. 31-12, Besho 3-chome**
**Minami-ku, Yokohama-shi, Kanagawa (JP)**

(74) Representative: **Schuh, Wolfgang et al**
**Rechtsanwälte Wolfgang Schuh, Dr. Bernd Tremml Martiusstrasse 5/II**
**D-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 085 438 B1**

Courier Press, Leamington Spa, England.

**Description for the Contracting States: DE FR GB IT NL**

Field of the invention

The present invention relates to a styrene-based resin composition which has excellent properties with respect to electromagnetic interference. More particularly, the invention relates to a styrene-based resin composition comprised of a styrene-based resin component and an aluminum component and optionally an electrically conductive carbon black.

Background of the invention

Radiation sources for electromagnetic waves have been increasing in number with continued advances in industrial technology and the general standard of living. The leakage of electromagnetic waves, therefore, has become a significant social problem since the wave can exert adverse influences on the human body. Such leakage may also cause the incorrect behavior of integrated circuits in electronic equipment. In particular, electromagnetic waves radiated from electronic computers and various office equipment exert adverse influences on television sets and audio equipment.

Even in the car industry, electronic devices are now used. For example, they are used in automatic controllers for various machines such as an engine, and further, in a speedmeter, a tachometer, and so forth. Several types of cars are now equipped with a microcomputer. In addition, electronic devices such as a telephone, a radio and a TV set are installed inside cars for the convenience of the driver. However, these electronic devices are liable to suffer from various operational difficulties under the influence of electromagnetic waves emanating from the engine compartment, or from a source outside the car.

Various methods have recently been used to shield such equipment against electromagnetic waves, and described in GB—A—1 073 567, GB—A—1 168 701, GB—A—1 195 076, GB—A—1 226 181 and GB—A—1 246 829; US—A—3 468 753, US—A—3 491 056, US—A—3 393 257, US—A—3 474 067, US—A—3 668 281, US—A—3 673 121, US—A—3 767 613, US—A—4 006 114 and US—A—4 234 469.

In general, since metals can absorb or reflect electromagnetic waves, they are effectively used as shielding materials for electromagnetic waves radiated from an electronic oven and various communication apparatuses. In addition, plastics with metals deposited thereon by vacuum metallizing method or arc spray coating method can be used for the same purpose. Furthermore, materials prepared by adding additives, e.g., carbon powder and metal powder, to plastics can be used.

Using metals alone or other materials coated with metals are disadvantageous in that the specific gravity is large, moldability is poor, the procedure of treatment is not simple, and the treatment cost is high. Similarly, a method of introducing additives is disadvantageous in that when these additives are added in small amounts, the effect cannot be exhibited sufficiently. However, when they are added in large amounts, the mechanical strength and moldability of the resulting molded article are seriously reduced although the effect can be exhibited.

Plastic molds are provided with a flash sprayed metal layer or an electrically conductive coating layer on the inner surface thereof for the purpose of shielding electromagnetic waves. The flash sprayed metal layer or the electrically conductive coating layer is separated from the plastic mold by the impulsive action of falling bodies. The thus-separated small pieces fall in the plastic mold, causing problems such as the break-down of electric circuits contained in the plastic mold and fire. Furthermore, containers for electronic devices, such as office machines must be flame resistant due to safety requirements. Accordingly, there is a need for a resin composition which is capable of providing a surface layer which is free from the separation and break-down caused by impulses. Further, the material must be flame resistant, have excellent workability, as well as electromagnetic wave-shielding ability.

In general, in order to increase the electromagnetic interference property of synthetic resins or rubbers, it is necessary to incorporate a large amount of electrically conductive carbon black in the resin. However, it is very difficult to provide flame resistance to compositions containing large amounts of carbon black. Even though additives such as halogen-containing organic compounds and antimony oxide are added to provide flame resistance, when the resulting composition is exposed to a flame in accordance with a flame resistance testing method (UL 94 Method: Underwriter Laboratories, U.S.A.), glowing due to carbonization of the carbon black is vigorous. Furthermore, the flame remains alive for a long period of time, and if other flammable substances are brought into contact with the flame, they will easily catch fire. Even if considerable amounts of flame retarders are added this tendency remains and it is quite difficult to eliminate these defects. Moreover, the addition of such large amounts of flame retarders to compositions with carbon black incorporated thereinto reduces the electromagnetic interference properties since it results in a reduction in the proportion of carbon black, even if flame resistance can be provided. Therefore, it is not possible to obtain a composition with good electromagnetic interference properties which also has excellent flame resistance. Furthermore, the use of such large amounts of expensive flame retarders causes increased costs. In addition, a molded article prepared from the composition does not have mechanical characteristics which are suitable for practical use.

Summary of the invention

The present inventors have carried out extensive investigations to develop an electromagnetic wave-shielding thermoplastic resin composition which is free from the above-described disadvantages and

which has excellent properties with respect to electromagnetic interference. As a result of these studies, the electromagnetic wave-shielding material of the present invention was found. The composition is comprised of:

(A) 40 to 90% by volume of a styrene-based resin component comprising (i) a styrene-based resin having at least 5% by weight of styrene, and (ii) 0 to 40% by weight of a rubber-like material,

(B) 10 to 60% by volume of an aluminum or aluminum alloy in a powdery, fibrous and/or flaky form (hereinafter referred to as "aluminum component"), or

(A) 40 to 90% by volume of the styrene-based resin component,

(B) the aluminum component, and

(C) an electrically conductive carbon black, wherein the proportions of the aluminum component and the electrically conductive carbon black in the composition is from 5 to 50% by volume, respectively, provided that the total proportion of the aluminum component and the electrically conductive carbon black is from 10 to 60% by volume.

One of the features of the invention is that aluminum component is used and it can be easily and uniformly mixed with styrene-based resins because its specific gravity is small compared with other metals. Further, because of its high flexibility, the aluminum component is less likely to damage a mixer, mold, or other equipment during the mixing and molding processes. In addition, the aluminum component has good moldability. Furthermore, aluminum is not corroded by moisture in air as are iron and other metals.

The electromagnetic wave-shielding material of the invention not only possesses excellent electromagnetic wave-shielding properties, but the following advantages.

(1) Light weight;

(2) Since the composition is composed of a styrene-based resin, it can be molded into any desired form;

(3) Mechanical characteristics such as bending strength and impact strength are good; and

(4) Fabrication costs normally required for the shielding treatments of electromagnetic waves (e.g., arc spray coating, electrical coating or plating of metals) are not required, which greatly reduces costs.

(5) When used in housing for electronic devices, it increases the heat dissipation efficiency in the inside thereof because of its high thermal conductivity.

(6) Since it is provided with electrically conductive properties, it is effective in eliminating difficulties created by static electricity—i.e., it has the effect of shielding static electricity.

Furthermore, the addition of a flame retardant into the styrene-based resin composition provides an electromagnetic wave-shielding material having superior flame retardant properties (V-0 as determined by Underwriter's Laboratories (UL) Method No. 94 in 3.2 mm (1/8 inch) thickness).

Materials provided with flame retardant properties provide safety with respect to abnormal current in electronic devices.

Since the electromagnetic wave-shielding material of the invention possesses the above-described effects as well as excellent electromagnetic wave-shielding properties, it will have various applications. Typical uses are shown below:

(1) Housing materials for office equipment such as a fascimile, a printer and a word-processor, and housing and structural materials for office computers and large-scale computers;

(2) Housing materials for electronic equipment such as a television set, a video system, a microwave oven, an air-conditioner and a sewing machine, and housing materials for communication equipments, various measuring instruments and medical instruments;

(3) Housing materials for control devices in connection with the engine power of a car, a meter display, a speed controller, a wiper-controlling unit, and a mirror-controlling unit;

(4) Prevention of noise for a car radio, a telephone, a television, and an illumination equipment;

(5) Protective cases for instruments used in cars;

(6) Panel housings for control instruments used in cars;

(7) Covers for electric wires in cars, home electric appliances, and office automation (OA) equipments (e.g., a furnace tube);

(8) Housing materials for control instruments such as NC machine tools and industrial robots.

Brief description of the drawings

Fig. 1 is a perspective view of a test specimen for use in the measurement of volume resistance, wherein A and B (obverse and reverse surfaces) indicate surfaces on which an electrically conductive silver paint has been coated.

Fig. 2 is a perspective view of a box-like injection molded product produced in each example or comparative example.

Detailed description of the invention

(A) Styrene-based resin

The molecular weight of the styrene-based resins which can be used in the present invention is generally from 10,000 to 1,000,000, preferably from 20,000 to 500,000, and the softening point is generally

not lower than 20°C, preferably from 20 to 250°C. Further, the content of styrene is at least 5% by weight and preferably 10% by weight or more.

Styrene-based resins as used herein are broadly divided as follows:

(1) Styrene homopolymer and copolymers of styrene and other monomers, said styrene constituting a major component (hereinafter referred to as "styrene-based resins (A)").

(2) Impact resistance resins as prepared by reacting a rubber-like material as described hereinafter with styrene or styrene and other vinyl compounds (hereinafter referred to as "styrene-based resins (B)").

These styrene-based resins (A) and (B) may be used alone or in combination with each other. The total styrene content of the styrene-based resins is at least 5% by weight.

These styrene-based resins (A) and (B) will hereinafter be explained in detail.

(1) Styrene-based resins (A)

Styrene-based resins (A) as used herein have in general a molecular weight of from 50,000 to 300,000 and include a styrene homopolymer and copolymers of styrene and organic compounds having a double bond, having a styrene content of at least 60% by weight. Typical examples of the double bond-containing organic compounds include ethylene, vinyl acetate, maleic anhydride, acrylonitrile, and methyl methacrylate. A method of production of these styrene-based polymers is well known, and they are widely used in a wide variety of applications. See *Encyclopedia of Polymer Science and Technology,* Vol. 13, p. 128.

(2) Styrene-based resins (B)

Styrene-based resins (B) as used herein are prepared by graft-polymerizing at least one member (hereinafter referred to as "rubber-like material") selected from the group consisting of butadiene-based rubber, acrylic acid ester-based rubber, ethylene/propylene-based rubber, and chlorinated polyethylene-based rubber, with styrene alone or a mixture of styrene and at least one vinyl compound selected from the group consisting of acrylonitrile and methyl methacrylate.

These rubber-like materials will hereinafter be explained in detail.

(a) Butadiene-based rubber

The term "butadiene-based rubber" is used herein to mean those rubbers composed mainly of butadiene i.e., containing 60% by weight or more of butadiene, including butadiene homopolymer rubber, and butadiene copolymer rubbers comprising butadiene and a small amount of styrene or acrylonitrile (e.g., SBR and NBR). The butadiene/styrene copolymer rubber may be a block copolymer rubber, or a random copolymer rubber. See *Encyclopedia of Polymer Science and Technology,* Vol. 2, p. 104 and p. 678.

(b) Acrylic acid ester-based rubber

This acrylic acid ester-based rubber is prepared by emulsion-polymerizing acrylic acid ester (e.g., butyl acrylate) and a small amount (usually 10% by weight or less) of different monomer (e.g., acrylonitrile) in the presence of a catalyst, e.g., persulfuric acid salt, and is usually called acryl rubber. See *Encyclopedia of Polymer Science and Technology,* Vol. 1 p. 226.

(c) Ethylene/propylene-based rubber

The term "ethylene/propylene-based rubber" is used herein to mean those multi-copolymerization rubbers including an ethylene/propylene copolymer rubber, and terpolymer rubbers composed mainly of ethylene and propylene and of small amounts (usually 10% by weight or less) of monomers, such as straight or branched diolefins containing two double bonds at the terminals thereof (e.g., 1,4-pentadiene, 1,5-hexadiene, and 3,3-dimethyl-1,5-hexadiene), straight or branched diolefins containing one double bond at the terminal hereof (e.g., 1,4-hexadiene and 6-methyl-1,5-heptadiene), and cyclic dienes or their derivatives (e.g., bicyclo[2,2,1]-heptene-2). The weight ratio of the ethylene monomer unit to the propylene monomer unit in the ethylene/propylene-based rubber is preferably from 30/70 to 70/30. These ethylene/propylene-based rubbers can be prepared by copolymerizing ethylene and propylene, or ethylene, propylene, and the above-described monomers in the presence of a catalyst comprising a transition metal compound, an organoaluminum compound, and the like. See *Encyclopedia of Polymer Science and Technology,* Vol. 6, p. 359.

(d) Chlorinated polyethylene-based rubber

This chlorinated polyethylene-based rubber is prepared by chlorinating polyethylene powder or grains as described hereinafter in an aqueous suspension, or by chlorinating polyethylene dissolved in an organic solvent. It is preferred to use the chlorinated polyethylene-based rubber as prepared by chlorinating in an aqueous suspension. In general, the rubber is amorphous or crystalline chlorinated polyethylene having a chlorine content of from 20 to 50% by weight, with amorphous chlorinated polyethylene having a chlorine content of from 25 to 45% by weight being particularly preferred. The polyethylene as used herein includes an ethylene homopolymer and copolymers of ethylene and 10% by weight or less of α-olefins (usually containing 6 or less carbon atoms). The density is generally from 0.910 to 0.970 g/cc, and the molecular weight is from 50,000 to 700,000. See *Encyclopedia of Polymer Science and Technology,* Vol. 6, p. 432.

In preparing the styrene-based resins (B) of the invention, the Mooney viscosity of the rubber-like material is desirably from 20 to 140, with the range of from 30 to 120 being particularly suitable, although it varies depending on the type of the rubber-like material. These rubber-like materials are commercially produced and widely used in a wide variety of applications. Their method of production, characteristics and uses are well known (see, for example, S. Kanbara, *Goseigomu Handbook (Synthetic Rubber Handbook)*, Asakura Shoten, Tokyo (1967)).

Styrene-based resins (B) as used herein are prepared by graft-polymerizing styrene alone or a mixture of styrene and at least one different vinyl compound (i.e., acrylonitrile and methyl methacrylate) onto the above-described rubbers. Graft-polymerization methods which can be used include a bulk polymerization method, a solution polymerization method, an emulsion polymerization method, an aqueous suspension method, and a combination thereof (e.g., a process in which, after bulk polymerization, aqueous suspension polymerization is performed). In general, the amount of the rubber-like material used in the preparation of 100 parts by weight of the styrene-based resin (B) is from 3 to 40 parts by weight and preferably from 5 to 35 parts by weight, with the range of from 5 to 30 parts by weight being particularly suitable. (There may be employed a process in which a relatively large amount of rubber-like material is used to prepare a graft polymer containing a large amount of rubber-like material, and the thus-prepared graft polymer is mixed with the above-described styrene, acrylonitrile, or methyl methacrylate homopolymer or copolymer resin. In this case, the amount of the rubber-like material used is calculated based on that of the resulting mixture including non-grafted rubber-like material). The molecular weight of the grafted parts consisting of styrene or a mixture of styrene and acrylonitrile and/or methyl methacrylate is usually from 1,000 to 300,000 and preferably from 2,000 to 200,000. In general, all of the monomer used are rarely bound to the rubber-like material, resulting in the formation of homopolymer or copolymer of the monomer. These homopolymers and copolymers are used as such without being separated from the graft copolymer. The content of styrene in the styrene-based resin (B) is preferably 20% by weight or more and particularly preferably 30% by weight or more.

Typical examples of the thus prepared styrene-based resins (B) include:

impact-resistant styrene resin (HIPS resin) as prepared by graft-polymerizing styrene alone onto a butadiene homopolymer or a styrene/butadiene block or random copolymer rubber (SBR) (see *Encyclopedia of Polymer Science and Technology,* Vol. 13, p. 193);

acrylonitrile/butadiene/styrene terpolymer resin (ABS resin) as prepared by graft-copolymerizing styrene and acrylonitrile onto a butadiene homopolymer rubber, SBR, or acrylonitrile/butadiene copolymer rubber (NBR) (see *Encyclopedia of Polymer Science and Technology,* Vol. 1, p. 436);

methyl methacrylate/butadiene/styrene terpolymer resin (MBS resin) as prepared by graft-copolymerizing styrene and methyl methacrylate onto butadiene homopolymer rubber or SBR;

acrylonitrile/acrylic acid ester/styrene terpolymer resin (AAS resin) as prepared by graft-copolymerizing acrylonitrile and styrene onto acrylic acid ester-based rubber;

graft copolymer resin (AES resin) as prepared by acrylonitrile and styrene onto ethylene/propylene-based rubber;

graft copolymer resin (ACS resin) as prepared by graft-copolymerizing styrene and acrylonitrile onto chlorinated polyethylene-based rubber; and

graft copolymer resin (MCS resin) as prepared by graft-copolymerizing styrene and methyl methacrylate onto chlorinated polyethylene-based rubber.

These styrene-based resins (A) and (B) may be used alone or in combination with the above-described rubber-like material. When the styrene-based resins are used in combination with the rubber-like material, the proportion of the rubber-like material in the styrene-based resin/rubber-like material mixture is 40% by weight or less and preferably 35% by weight or less. The styrene-based resins and the styrene-based resin/rubber-like material mixture are herein referred to merely as "styrene-based resin component".

(B) Aluminum component

The mean size of the powdery aluminum or aluminum alloy is generally from 250 to 20 mesh. The diameter of the fibrous aluminum or aluminum alloy is generally from 0.0020 to 0.50 mm, and a fibrous aluminum or aluminum alloy having a length of 10 mm or less is preferred since it is easy to work with. Flaky aluminum or aluminum alloy may be in a form such as circular, triangular, square, rectangular, hexagonal or like form having a surface area of from 0.1×0.1 mm to 5×5 mm. A flaky aluminum or aluminum alloy having a thickness of 0.1 mm or less is particularly preferred. In particular, a flaky aluminum or aluminum alloy having a square form with a surface area of about 1×1 mm, and a thickness of about 0.03 mm has good dispersibility in the styrene-based resin component and does not become entangled unlike aluminum fibers, not forming any entangled material. Furthermore, these aluminum flakes have a strong tendency of orientating in the direction in which the impact resistant resin flows during molding. When used in the same amount, therefore, the composition containing aluminum flakes not only has good electric conductivity, but also is improved with respect to flexural modulus of elasticity compared with the composition containing aluminum fibers. In particular, aluminum flakes having a surface area of 1 mm×1 mm is most preferred from a viewpoint of dispersion properties.

The powdery, fibrous and flaky aluminum or aluminum alloys may be used alone. However, it is

suitable to use them in combination with each other because the effect of the invention can be obtained at a low mixing ratio. The aluminum content of the aluminum alloy is usually at least 80% by weight.

(C) Carbon black

The electrically conductive carbon black as used herein generally has a specific surface area of from 20 to 1,800 $m^2/g$, as determined by the low temperature nitrogen absorption method (see ASTM D 3037—78) and the BET method, and a pore volume of from 1.5 to 4.0 ml/g as determined by the mercuryl pressure-introduction method (see *Powder Technology,* Vol. 29 (1), pp. 45—52, 1981) within the pore diameter of from 30 to 7,500 Å. In particular, carbon black having a specific surface area of from 200 to 1,200 $m^2/g$ can be effectively used in the invention.

The carbon black includes channel black, acetylene black, and carbon black produced by the furnace black method. Of these, carbon black produced by the furnace black method is particularly preferred because it has good dispersibility and does not reduce mechanical strength of the resulting composition. The method of production, physical properties, etc., of such carbon blacks are well known as described in Carbon Black Association ed., *Handbook of Carbon Black,* Tosho Shuppan, Tokyo (1972), *Handbook of Rubber/Plastic Compounding Chemicals,* Rubber Digest Co., Ltd., Japan (1974), and *Encyclopedia of Polymer Science and Technology,* Vol. 2, pp. 820—836.

In view of strict regulations for flame retardant properties, it is preferred to further incorporate halogen-containing organic compounds and antimony oxide as described hereinafter into the styrene-based resin composition. Into the composition, it is preferred to further incorporate hydrous inorganic substances as well as the halogen-containing organic compounds and antimony oxide.

(D) Halogen-containing organic compound and antimony oxide

Halogen-containing organic compounds which are used in the invention are widely known as flame retardants. Of these flame retarders, those having a halogen content of from 20 to 90% by weight, preferably from 30 to 90% by weight, more preferably from 40 to 85% by weight are preferred. In particular, those having a melting point of 200°C or less and a boiling point of at least 300°C are suitable. The halogen-containing organic compounds are liquid or solid at room temperature (20°C), and particularly those having a decomposition initiating temperature or a boiling point of at elast 200°C are preferred. The molecular weight of halogen-containing organic compounds are generally from 500 to 5,000 and preferably from 500 to 4,000. Preferred examples of such halogen-containing organic compounds are chlorine-containing compounds and bromine-containing compounds. Typical preferred examples are tetrachlorophthalic anhydride, chlorinated paraffin, chlorinated bisphenol A, brominated bisphenol S, chlorinated diphenyl, brominated diphenyl, chlorinated naphthalene, tris(β-chloroethyl)phosphate and tris(dibromobutyl)phosphate.

The antimony oxide as used herein is generally used as a flame-retardant aid for the above-described halogen-containing organic compound. Preferred examples are antimony trioxide and antimony pentaoxide.

These halogen-containing organic compounds and antimony oxide are well known as described in the above described *Handbook of Rubber/Plastic Compounding Chemicals* and *Encyclopedia of Polymer Science and Technology,* Vol. 7, p. 1.

(E) Hydrous inorganic substance

The hydrous inorganic substance as used herein has a bound water content of from 10 to 80% by weight and a true specific gravity of from 1.0 to 5.0. Hydrous inorganic substances capable of releasing water at 150 to 500°C, particularly 200 to 450°C, are preferably used for the purpose of the invention. Typical examples of such hydrous inorganic substances are hydrates of Group IIA, IIB and IIIB metals and salts containing such metals. Examples include compounds containing water in the molecule thereof, e.g., magnesium hydroxide, calcium hydroxide, aluminum hydroxide ($Al_2O_3$ $nH_2O$), hydrous gypsum, kaolin clay, calcium carbonate, hydrotalcite, basic magnesium carbonate, magnesium borate, and precipitated sulfate of barium, magnesium or calcium. These hydrous inorganic substances are insoluble in water, and the solubility in 100 ml of water at 20°C is generally 10 g or less, preferably 1 g or less, and especially preferably 0.1 g or less. Preferred hydrous inorganic substances include aluminum hydroxide, hydrous gypsum, magnesium hydroxide, calcium carbonate, basic magnesium carbonate, and precipitated magnesium or calcium sulfate. See *Encyclopedia of Polymer Science and Technology,* Vol. 7, p. 740.

The antimony oxides and hydrous inorganic substances which can be used in the present invention generally have an average particle size of 0.1 to 100 µm, preferably 0.2 to 50 µm, more preferably 0.3 to 40 µm.

When the styrene-based resin composition comprised of the styrene-based resin component and the aluminum component is prepared, the proportion of the styrene-based resin component in the composition is from 40 to 90% by volume, preferably from 45 to 85% by volume, and the proportion of the aluminum component is from 10 to 60% by volume, preferably 15 to 55% by volume. When the proportion of the aluminum component contained is less than 10% by volume, no sufficient electrical conductivity necessary for electromagnetic wave-shielding can be obtained. On the other hand, when the proportion of the aluminum component is more than 60% by volume, it becomes difficult to uniformly mix the aluminum

component with the styrene-based resin component and even if a uniform composition is prepared, the resulting composition does not have sufficient strength for practice use.

When the styrene-based composition which further contains the electrically conductive carbon black is prepared, the proportion of the styrene-based resin component contained in the composition is from 40 to 90% by volume and preferably from 50 to 85% by volume. The proportion of the aluminum component contained in the composition is from 5 to 50% by volume and preferably from 10 to 45% by volume. The proportion of the electrically conductive carbon black contained is from 5 to 50% by volume and preferably from 10 to 45% by volume.

When the proportion of the electrically conductive carbon black is less than 5% by volume, no sufficient electrical conductivity necessary for electromagnetic wave-shielding can be obtained. On the other hand, when the electrically conductive carbon black is added in greater amounts than 50% by volume, it becomes difficult to uniformly mix the carbon black with the styrene-based resin component, and the resulting resinous layer does not have sufficient strength for practical use.

Incorporation of the aluminum component into the styrene-based resin composition is not only performed for the purpose of increasing the electromagnetic wave-shielding performance, but also is intended to achieve multiple scattering of electromagnetic waves on the surface of the aluminum component.

In order to enhance the synergistic effect of the electrically conductive carbon black and aluminum component, it is necessary to add the aluminum component in a proportion of at least 5% by volume. When the proportion of the aluminum component added is less than 5% by volume, the synergistic effect of the carbon black and aluminum component is decreased. On the other hand, when it is more than 50% by volume, it becomes impossible to uniformly mix the aluminum component with the styrene-based resin component.

One of the features of the invention is that in the styrene-based resin composition, the aluminum component is used in combination with the electrically conductive carbon black, and the total proportion of the aluminum component and the electrically conductive carbon black is from 10 to 60% by volume. Particularly it is preferred for the total proportion to be within the range of from 10 to 50% by volume. In connection with the volume ratio of aluminum component to electrically conductive carbon black, it is preferably within the range of from 4.0/1 to 1/4.0. It has been found that by mixing the electrically conductive carbon black having the electromagnetic wave-shielding effect at a high frequency region (MHz) and the aluminum component having the electromagnetic wave-shielding effect at a low frequency region (KHz), the resulting mixture is allowed to have the electromagnetic wave-shielding effect over a wider frequency region, and that even at a region where the electromagnetic wave-shielding effect is almost not exhibited when the aluminum component or electrically conductive carbon black is used alone, if they are used in combination with each other, the electromagnetic wave-shielding effect can be exhibited very significantly. Although the exact reason for such significant effect is not known, it is considered that electromagnetic wave energy reflected by or absorbed in the aluminum component is grounded through the electrically conductive carbon black. This is supported by the fact that when the aluminum component is used in combination with the electrically conductive carbon black, the electric conductivity of the composition of the invention is greatly increased.

When the total proportion of aluminum component and electrically conductive carbon black contained in the styrene-based resin composition is less than 10% by volume, its electromagnetic wave-shielding effect is poor particularly at a low frequency region. On the other hand, when the proportion is more than 60% by volume, the moldability of the resulting composition is undesirably decreased.

The halogen-containing organic compound and the antimony oxide may be added in the styrene-based resin composition in an amount of 5 parts by weight or more, respectively, per 100 parts by weight of the total amount of the styrene-based resin component, aluminum component and electrically conductive carbon black. The total proportion of the halogen-containing organic compound and antimony oxide is preferably from 10 to 45 parts by weight and more preferably from 15 to 45 parts by weight. The proportion of antimony oxide per halogen element contained in 100 parts by weight of the halogen-containing organic compound is usually from 100 to 600 parts by weight and preferably from 100 to 400 parts by weight. In view of flame retardant properties and bleeding, it is suitably from 150 to 400 parts by weight.

In addition to the processings to make a product flame-resistant by the use of the flame retardants (halogen-containing organic compounds and antimony oxide), hydrous inorganic substances can be added in order to improve moldability and to provide high flame resistance (V-0 as determined by the UL-94 method). The proportion of the hydrous substance added is 50 parts by weight or less, preferably 45 parts by weight or less, per 100 parts by weight of the total amount of the styrene-based resin component, aluminum component and electrically conductive carbon black. The addition of the hydrous inorganic substance in a proportion of at least 5 parts by weight, preferably at least 10 parts by weight, and more preferably at least 20 parts by weight, per 100 parts by weight of the electrically conductive carbon black, is preferred because it permits the production of a composition having good flame resistance, mechanical characteristics, and moldability.

In the preparation of the styrene-based resin composition of the invention, all ingredients may be mixed at the same time, or some of the ingredients may be previously mixed to form a mixture, which is in turn mixed with the remaining ingredients (for example, the styrene-based resin component is previously

mixed with the electrically conductive carbon black, and the resulting mixture is then mixed with the aluminum component). Furthermore, there may be employed a process in which part of the styrene-based resin component is previously mixed with all or part of the aluminum component and/or electrically conductive carbon black to form a master batch, and the thus-formed master batch is then mixed with the remaining ingredients.

In producing the styrene-based resin composition of the invention, stabilizers against oxygen, heat and light, metal deterioration-preventing agents, fillers, lubricants, and other additives, which are generally used in the field of styrene-based resins, can be further added.

In the preparation of the styrene-based resin composition, the necessary ingredients may be dry-blended by the use of a mixer, e.g., a Henschel mixer, which is generally used in processing of styrene-based resins, or may be molten-kneaded by the use of a mixer, e.g., a Banbury mixer, a kneader, a roll mill, and a screw type extruder. By dry-blending the ingredients and then, molten-kneading the resulting composition (or mixture), a uniform composition can be obtained. In this case, in general, the composition (or mixture) thus molten-kneaded is pelletized and supplied to the subsequent molding process.

Both the molten-kneading and molding should be performed at temperatures higher than the softening point of the styrene-based resin component used. Since, however, thermal degradation of part of the styrene-based resin component may occur if the molten-kneading and molding are performed at higher temperatures than 300°C, they should be, of course, performed at temperatures lower than that at which the thermal degradation occurs. In molten-kneading kneading and molding, therefore, processing temperature of the styrene-based resin component varies depending upon the kind of styrene-based resin component used. Typical processing temperatures of the styrene-based resins are shown below.

| | Processing temperature (°C) | (Preferred temperature) (°C) |
|---|---|---|
| Styrene-based Resins (A) | 180—250 | (200—250) |
| Styrene-based Resins (B) | " | ( " ) |

Molding methods which can be used include an extrusion molding method, an injection molding method, and a press molding method. In addition, molding methods which are generally used in the field of styrene-based resins, such as a stamping method, a press molding method using an extruded sheet, and a vacuum molding method, can be used.

The thus-prepared styrene-based resin composition of the invention can be shaped into various forms because of its excellent moldability and can be used in various applications.

The present invention will hereinafter be explained in detail by reference to the examples and comparative examples as described hereinafter.

In the examples and comparative examples, various physical properties were measured according to tests defined in ASTM as follows:

| Physical properties | ASTM |
|---|---|
| Flow rate | D1238-79 under Condition N |
| Izod impact strength | D256-56 |
| Tensile strength | D2638-72 |
| Bending strength | D790-71 |
| Young's modulus in flexure | D790 |
| Vicat softening point | D1528-58T |

Further the volume resistivity and the effect of shielding electromagnetic waves were also measured as follows:

Volume resistivity: An electrically conductive silver paint was coated on both the obverse and reverse surfaces of each of parts A and B (both having a width of 1 cm) of a molded article (having a length of 3 cm and a width of 1 cm) as shown in Fig. 1. After the paint was fully dried, the resistance between the paint-coated spots for each of parts A and B was measured by the use of a tester (SANWA SR-3TR, manufactured by Sanwa Denki Keiki Co., Ltd.). The thus-measured value was divided by the thickness, t, to obtain the volume resistivity. This volume resistivity is indicated in the unit of $\Omega \cdot cm$.

Effect of shielding electromagnetic waves: A box as shown in Fig. 2 was produced, (depth: 100 mm,

width: 120 mm, length: 290 mm and thickness: 3 mm), in which was placed a portable oscillator adjusted in frequency to 600 MHz. This box was placed in an electric wave shielded place, and the electric waves from the oscillator were received by means of a receiving antenna and measured by means of a wattmeter for microwaves, Similarly, the electric waves from the oscillator, not placed in the box, were measured as a control. The ratio of the former field strength (μV) to the latter (control) field strength (μV) was expressed in decibel (dB), and indicated as an electromagnetic wave attenuation amount of the sample sheet.

The styrene-based resin, rubber-like material, aluminum flake, aluminum powder, aluminum fiber, electrically conductive carbon black, halogen-containing organic compound, antimony oxide, and hydrous inorganic substance as used in the examples and comparative examples are as follows:

Styrene-based resin (PS)

Styrene was suspended in water and, after addition of an emulsifier and a catalyst, polymerized at a temperature of 90°C to prepare a styrene resin having a flow index of 1.30 g/10 min. This styrene resin is designated as "PS".

Styrene-based resin (HIPS)

Styrene (92 parts by weight) was graft-copolymerized onto 8.1 parts by weight of a styrene-butadiene random copolymer rubber (styrene content: 25.3% by weight; Mooney viscosity ($ML_{1+4}$): 25) to prepare a high impact polystyrene having a flow index of 13.0 g/10 min. This high impact polystyrene is designated as "HIPS".

ABS Resin

A 20-liter autoclave made of stainless steel was charged with 280.0 g (as solids) of a styrene-butadiene copolymer rubber (butadiene content: 80% by weight; gel content of rubber: 80%), 2.0 g of ammonium persulfate, 80.0 g of sodium rosinate for disproportionation, 21.0 g of laurylmercaptan, and 8.0 l (liters) of water. They were uniformly mixed, and 2,520 g of styrene and 1,200 g of acrylonitrile were added thereto. The resulting mixture was stirred, and then, raised in temperature to 70°C while stirring. At this temperature, polymerization was performed with stirring for 10 hours. To the thus-prepared polymer (grafted product)-containing latex-like material was added a 5% aqueous solution of aluminum sulfate to coagulate the grafted product. The coagulated product was washed with about 5,200 ml of an about 1% aqueous solution of sodium hydroxide, and further, with a large amount (about 30 liters) of hot water maintained at 70°C. The grafted product was dried at about 80°C under reduced pressure for about 24 hours. There was thus obtained 3,785 g of white powdery grafted product. The Izod impact resistance of the grafted product was 7.5 Kg-cm/cm-notch, and its tensile strength was 468 kg/$cm^2$. The Vicat softening point of the polymer was 101.5°C. The rubber-like material content of the grafted product was 7.3% by weight. This grafted product is hereinafter referred to as "ABS".

MBS Resin

A 20-liter autoclave made of stainless steel was charged with about 12,000 ml of an aqueous dispersion containing 1,380 g of a butadiene-styrene copolymer rubber (Mooney viscosity: 50) consisting of 76.5% by weight of butadiene and 23.5% by weight of styrene. An aqueous solution of 480 g of sodium formaldehydesulfoxylate dihydrate dissolved in about 2,400 ml of water, and 160.0 g of cumene hydroperoxide were added in a stream of nitrogen while maintaining the temperature at 60°C. The mixture was stirred for 1 hour. Then, a mixture of 7,680 g of methyl methacrylate and 32.0 g of cumene hydroperoxide was added, and polymerization was allowed to proceed. After about 7 hours, the polymerization conversion ratio was 91.8%. Thereafter, a mixture of 6,880 g of styrene and 32.0 g of cumene hydroperoxide was added, and polymerization was allowed to proceed. After about 6 hours, the polymerization conversion ratio was 93.3%. To the resulting reaction solution were added an aqueous solution of hydrochloric acid and sodium chloride (salt) to coagulate it. The thus-obtained precipitate was filtered off, thoroughly washed with hot water, and then, dried at a temperature of about 80°C under reduced pressure for about 24 hours. There was thus obtained a white powdery polymer (grafted product). The Izod imapct strength of the grafted product was 7.6 kg · cm/cm-notch, and its tensile strength was 415 kg/$cm^2$. The Vicat softening point of the grafted product was 97.2°C. The rubber-like material content of the grafted product (hereinafter referred to as "MBS") was 9.6% by weight.

AAS Resin

A 20-liter autoclave made of stainless steel was charged with about 8,000 ml of distilled water, 24.0 g of sodium dodecylbenzene sulfonate, 0.80 g of ammonium persulfate as a polymerization catalyst, and as monomers, 784 g of butyl acrylate and 16.0 g of glycidyl methacrylate. Polymerization was performed at 77°C with stirring until the monomers are almost completely polymerized to prepare acrylic acid ester-based rubber. To the polymerization system containing the acrylic acid ester-based rubber were added 1,680 g of styrene and 720 g of acrylonitrile as monomers, and 16.0 g of potassium persulfate as a polymerization catalyst, and polymerization was performed at 83°C for 10 hours while stirring. There was thus obtained an emulsion polymer (grafted product) containing almost no unreacted monomers. When a 5% aqueous solution of aluminum sulfate was added dropwise to the above-obtained grafted

product-containing emulsion while stirring, the polymer (grafted product) precipitated. This water-containing polymer was then centrifugated to remove the water, and the polymer was fully washed with water and dried at about 50°C under reduced pressure for about 24 hours. The Izod impact strength of the grafted product was 24.8 kg · cm/cm-notch, and its tensile strength was 350 kg/cm$^2$. The softening point was 97.6°C. The rubber-like material content of the grafted product (hereinafter referred to as "AAS") was 23.8% by weight.

AES Resin

A 20-liter autoclave made of stainless steel was charged with 5,350 g of styrene as a monomer, 1,500 g of an ethylene-propylene-diene terpolymer rubber (Mooney viscosity $ML_{1+4}$ (100°C)): 45; unconjugated diene component: ethylidenenorbornene; iodine value: 25) as a rubber-like material, and 1.0 kg of n-heptane. After the air in the autoclave was replaced by nitrogen, the mixture was stirred at 50°C for 2 hours to completely dissolve the ethylenepropylene-diene terpolymer rubber in styrene. To this reaction (polymerization) system was added 2,150 g of acrylonitrile as a monomer, and the resulting mixture was fully stirred to form a uniform solution. To the uniform solution were added 5.0 g of terpinolene and, as a catalyst, a mixture of 5.0 g of di-tert-butyl peroxide and 1.3 g of tert-butyl peracetate. The resulting polymerization system was raised in temperature to 97°C. Bulk polymerization was performed for 7 hours and 20 minutes at a nitrogen pressure of 1 kg/cm$^2$ while maintaining the temperature at 97°C. About 30 minutes before the completion of the polymerization, a solution of 15.0 g of di-tert-butyl peroxide and 15.0 g of terpinolene dissolved in 500 g of styrene was added to the reaction mixture. The thus-formed syrup (containing polymer) was transferred to a 30-liter autoclave in which 11 liters of water (containing 25 g of an acrylic acid-acrylic acid ester copolymer as a suspension) had been placed, and nitrogen was passed through the autoclave to displace the air. This aqueous suspension was subjected to suspension polymerization for 2 hours with vigorous stirring at 130°C. The reaction mixture was then raised in temperature to 150°C and was subjected to stripping for 1 hour. The thus-obtained polymer (graft-blended product) was fully washed with water and dried at 100°C for about 24 hours. There was thus obtained 9.28 kg of a grafted product (hereinafter referred to as "AES"). The rubber-like material content of this AES was 16.0% by weight. The Izod impact strength of the AES was 37.9 kg · cm/cm-notch, and its tensile strength was 350 kg/cm$^2$. The Vicat softening point was 98.0°C.

ACS(1) Resin

A 20-liter autoclave was charged with 1,600 g of chlorinated polyethylene (Mooney viscosity: 76; chlorine content: 40.6% by weight; hereinafter referred to as "Cl-PE(a)", 32.0 g of polyvinyl alcohol (degree of saponification: 95%), and about 8.0 liters of water (ion exchanged water), which were then vigorously stirred at room temperature (about 23°C). To the thus-formed dispersion were added 4,560 g of styrene and 1,520 g of acrylonitrile as monomers, 320 g of fluid paraffin as a lubricant, 16.0 g of tert-butyl peracetate as a polymerization initiator, and 16.0 g of tert-dodecylmercaptan as a chain transfer agent. The air above the suspension of the reaction system was displaced by nitrogen gas, and the temperature was then raised to 105°C. While stirring at this temperature, polymerization was performed for 4 hours, and further, it was performed at 145°C for 2 hours. The reaction system was allowed to cool to room temperature. The thus-obtained polymer (grafted product) was filtered off and fully washed with water. The grafted product was then dried at 50°C under reduced pressure for about 24 hours. The polymerization conversion (based on the monomers used in the polymerization) was 95.4%, and the product was in the form of slightly coarse powder. The rubber-like material content of the grafted product (hereinafter referred to as "ACS(1)" was 20.3% by weight.

ACS(2) Resin

The polymerization was carried out by the same condition as in the preparation of ACS(1), except that the amount of Cl-PE(a) was changed to 6.0 kg, the amount of styrene was changed to 1,280 g and the amount of acrylonitrile was changed to 320 g. After the termination of the polymerization, the thus-obtained polymer was filtered off, washed with water and dried in the same conditions as in the purification of ACS(1). The polymerization conversion of the thus-obtained grafted product (hereinafter referred to as "ACS(2)") was 95.3% and the product was in the form of slightly coarse powder. The rubber-like material content of the grafted product was 79.6% by weight.

Mixtures (1) to (3)

To 70 parts by weight of an acrylonitrile-styrene copolymer resin (acrylonitrile content: 23% by weight; hereinafter referred to as "AS") were added, as a rubber-like material, chlorinated polyethylene (chlorine content: 31.6% by weight; Mooney viscosity ($MS_{1+4}$): 78) as prepared by chlorinating an ethylene-butene-1 copolymer (molecular weight: about 250,000; density: 0.931 g/cm$^3$) in an aqueous suspension form, the same butadiene-styrene copolymer rubber (hereinafter referred to as "SBR") as used in the production of the MBS resin, and the same ethylene-propylenediene terpolymer rubber as used in the production of the AES resin, all being used in an amount of 30 parts by weight, and melted and kneaded in a 60-liter Banbury mixer (resin temperature: 180°C) to produce Mixtures (1), (2) and (3), respectively.

Aluminum flake

Square flake-like aluminum (hereinafter referred to as "Al flake") having a cross-sectional area of 1 mm×1 mm and a thickness of 0.03 mm was used.

Aluminum powder

Aluminum powder (hereinafter referred to as "Al powder") having a grain size of from 74 to 150 μm was used.

Aluminum fiber

As an aluminum fiber, an aluminum fiber (hereinafter referred to as "Al fiber") having a length of about 6 mm and a diameter of 65 μm was used.

Electrically conductive carbon black

Furnace black (produced by Cabot Corp., U.S.A. under the trade name of Vulcan XC-73; density: about 1.8 g/ml; surface area: 200 $m^2/g$; hereinafter referred to as "C.B.") having a mean grain size of about 30 μm was used.

Halogen-containing organic compound

As a halogen-containing organic compound, decabromodiphenyl oxide (melting point: 304°C; average particle size: 3 μm; bromine content: about 82% by weight: hereinafter referred to as "DBPO") was used.

Antimony oxide

Antimony trioxide (melting point: 656°C; average particle size 0.5 μm; hereinafter referred to as "$Sb_2O_3$") having a density of 5.25 $g/cm^3$ was used as antimony oxide.

Hydrous inorganic substance

As hydrous inorganic substance was used finely pulverized magnesium silicate (density: 2.75 $g/cm^3$; specific surface area: 20 $m^2/g$; grain diameter: 0.32—6 microns; $SiO_2$ content: 62.5% by weight; MgO content: 30.6% by weight; $H_2O$ content: 4.99% by weight; hereinafter referred to as "MgO $SiO_2$").

Examples 1 to 21 and Comparative Examples 1 to 5

Styrene-based resins, Al flake, Al powder, and Al fiber as Al component, and C.B. as electrically conductive carbon black were used and previously dry-blended in the proportions shown in Table 1 in a Henschel mixer for 5 minutes. The thus-prepared mixtures were each melted and kneaded at a resin temperature of 230°C in a twin-screw extruder (diameter: 30 mm) and extruded therefrom to produce the respective pellets. The pellets obtained were each molded (resin temperature: 230°C) to obtain test samples (thickness: 3 mm) using an extruder or an injection molding machine.

The volume resistivity and the electromagnetic attenuation amount of respective samples obtained were measured and the results are shown in Table 2.

TABLE 1

| Example No. | Styrene-based resin | | | | Al Component | | Amount of C.B. Compounded[1] |
|---|---|---|---|---|---|---|---|
| | Type | Amount[1] | Type | Amount[1] | Type | Amount[1] | |
| 1 | HIPS | 90 | — | 0 | Al flake | 10 | 0 |
| 2 | " | 80 | — | 0 | " | 20 | 0 |
| 3 | " | 60 | SBR | 10 | " | 30 | 0 |
| 4 | PS | 50 | " | 20 | " | " | 0 |
| 5 | AAS | 60 | AES | " | " | 20 | 0 |
| 6 | ACS (1) | 80 | — | 0 | " | " | 0 |
| 7 | Mixture (1) | " | — | 0 | " | " | 0 |
| 8 | " (2) | " | — | 0 | " | " | 0 |
| 9 | " (3) | " | — | 0 | " | " | 0 |
| 10 | HIPS | 50 | SBR | 20 | Al fiber | 30 | 0 |
| 11 | " | 40 | " | " | Al powder | 40 | 0 |
| 12 | " | 80 | — | 0 | Al flake | 10 | 10 |
| 13 | " | 60 | SBR | 10 | " | 15 | 15 |
| 14 | " | 50 | " | " | " | 20 | 20 |
| 15 | " | 60 | " | " | " | 10 | " |
| 16 | " | 70 | — | 0 | " | 20 | 10 |
| 17 | " | 60 | SBR | 10 | Al fiber | 15 | 15 |
| 18 | " | 50 | " | " | Al powder | 20 | 20 |
| 19 | ABS | 70 | " | " | Al flake | 15 | 15 |
| 20 | MBS | 60 | " | 10 | " | " | " |
| 21 | ACS (2) | 70 | — | — | " | " | " |
| Comparative Example | | | | | | | |
| 1 | HIPS | 97 | — | 0 | Al flake | 3 | 0 |
| 2 | " | 20 | SBR | 10 | Al powder | 70 | 0 |
| 3 | " | 92 | — | 0 | Al flake | 3 | 5 |
| 4 | " | 20 | — | 0 | Al powder | 60 | 20 |
| 5 | " | " | — | 0 | Al flake | 20 | 60 |

[Note] [1]: % by volume

TABLE 2

| Example No. | Volume resistivity (Ω · cm) | Electromagnetic attenuation amount (dB) |
|---|---|---|
| 1 | $10^{2}$ | 18 |
| 2 | $10^{1}$ | 20 |
| 3 | $10^{0}$ | 24 |
| 4 | $10^{0}$ | 22 |
| 5 | $10^{1}$ | 17 |
| 6 | $10^{1}$ | 16 |
| 7 | $10^{1}$ | 16 |
| 8 | $10^{1}$ | 16 |
| 9 | $10^{1}$ | 15 |
| 10 | $10^{0}$ | 22 |
| 11 | $10^{0}$ | 25 |
| 12 | $10^{0}$ | 27 |
| 13 | $10^{0}$ | 29 |
| 14 | $10^{0}$ | 37 |
| 15 | $10^{0}$ | 35 |
| 16 | $10^{0}$ | 36 |
| 17 | $10^{0}$ | 30 |
| 18 | $10^{0}$ | 34 |
| 19 | $10^{0}$ | 32 |
| 20 | $10^{0}$ | 34 |
| 21 | $10^{0}$ | 32 |
| Comparative Example | | |
| 1 | $10^{15}$ | 2 |
| 2 | $10^{0}$ | — |
| 3 | $10^{15}$ | 5 |
| 4 | $10^{0}$ | — |
| 5 | $10^{0}$ | — |

[Note] —: No sample was prepared.

It is apparent from the results in Table 2 that the styrene-based resin composition of the invention has excellent properties with respect to electromagnetic interference.

Examples 22 to 31 and Comparative Examples 6 to 8

Styrene-based resins, Al flake, Al powder and Al fiber as Al component and C.B. and $Sb_2O_3$, DBPO and $MgO \cdot SiO_2$ as flame retardants were used and previously dry-blended in the proportions shown in Table 3 in a Henschel mixer for 5 minutes. The thus-prepared mixtures were each melted and kneaded at a resin temperature of 230°C by the use of a twin-screw extruder (diameter: 30 mm), and extruded therefrom to produce the respective pellets. Samples were obtained in the same manner as in Example 1 using each pellet. The flame resistance, volume resistivity and electromagnetic attenuation amount were measured and the results are shown in Table 4.

TABLE 3

| Example No. | Styrene-based resin | | | | Al Component | | Amount of C.B. Compounded[1] | Amount of $Sb_2O_3$[2] | Amount of DBPO[2] | Amount of $MgO \cdot SiO_2$[2] |
|---|---|---|---|---|---|---|---|---|---|---|
| | Type | Amount[1] | Type | Amount[1] | Type | Amount[1] | | | | |
| 22 | HIPS | 80 | — | 0 | Al flake | 20 | 0 | 8 | 10 | 0 |
| 23 | " | 60 | SBR | 10 | " | 30 | 0 | " | " | 0 |
| 24 | ACS (1) | 80 | — | 0 | " | 20 | 0 | " | 8 | 0 |
| 25 | HIPS | " | — | 0 | Al fiber | " | 0 | " | " | 0 |
| 26 | " | " | — | 0 | Al powder | " | 0 | " | " | 0 |
| 27 | " | " | — | 0 | Al flake | 10 | 10 | " | " | 10 |
| 28 | " | 60 | SBR | 10 | " | 15 | 15 | " | " | 12 |
| 29 | " | 50 | " | " | " | 20 | 20 | " | " | 15 |
| 30 | " | 65 | — | 0 | Al powder | " | 15 | " | " | " |
| 31 | Mixture (1) | 70 | — | 0 | Al flake | 15 | 15 | " | " | 12 |
| Comparative Example 6 | HIPS | 80 | — | 0 | Al flake | 20 | 0 | 8 | 0 | 0 |
| 7 | " | " | — | 0 | " | " | 0 | 0 | 8 | 0 |
| 8 | " | 70 | — | 0 | " | 15 | 15 | 8 | 10 | 0 |

[Note] 1): % by volume
2): parts by weight per 100 parts by weight (total) of the styrene-based resin(s), the Aluminum component and the carbon black.

TABLE 4

| Example No. | Flame[1)] resistance | Volume resistivity (Ω · cm) | Electromagnetic attenuation amount (dB) |
|---|---|---|---|
| 22 | V-0 | $10^2$ | 17 |
| 23 | " | $10^1$ | 19 |
| 24 | " | $10^2$ | 15 |
| 25 | " | $10^2$ | 16 |
| 26 | " | $10^2$ | 14 |
| 27 | " | $10^1$ | 23 |
| 28 | " | $10^0$ | 28 |
| 29 | " | $10^0$ | 36 |
| 30 | " | $10^0$ | 33 |
| 31 | " | $10^0$ | 29 |
| Comparative Example 6 | combustion | $10^0$ | 16 |
| 7 | V-1 | $10^0$ | 17 |
| 8 | " | $10^0$ | 34 |

[Note] [1)]: determined by Underwriter's Laboratories (UL) method No. 94 in 1/8 inch thickness.

It is apparent from the results in Table 4 that by the addition of the flame retardants the styrene-based resin composition of the invention has not only excellent electromagnetic wave-shielding properties but also excellent flame resistance.

The styrene-based resin compositions obtained in Examples 2, 5, 22, 25, 29 and 35 and Comparative Example 3 were molded to prepare test pieces, and the Izod impact strength, tensile strength, bending strength and Young's modulus in flexure of the test pieces were measured. The results are shown in Table 5.

TABLE 5

| Example No. | Izod impact strength[1)] (kg · cm/cm) | Tensile strength ($kg/cm^2$) | Bending strength ($kg/cm^2$) | Young's modulus in flexure ($kg/cm^2$) |
|---|---|---|---|---|
| 2 | 8.5 | 210 | 490 | 25,500 |
| 5 | 15.0 | 230 | 250 | 18,300 |
| 19 | 4.8 | 270 | 370 | 26,000 |
| 24 | 1.2 | 280 | 320 | 22,000 |
| 28 | 8.0 | 190 | 310 | 19,800 |
| Comparative Example 3 | 9.3 | 230 | 450 | 23,500 |

[Note] [1)]: notched

A molded article as shown in Fig. 2 was produced by means of an injection molding machine (preset temperature: 230°C; molding pressure: 650 tons) using the pellet prepared in each Example.

This molded article was a rectangular box-like product having a depth of 100 mm, a width of 120 mm, a length of 290 mm and an average thickness of 3 mm.

The impact resistance of each molded article was measured according to UL-114, safety specification 53.24—i.e., a steel ball having a weight of 1.18 pounds and a diameter of 2 inches was allowed to drop on the surface of a test specimen (the back surface of the bottom of the box shown in fig. 2) from a height of 1.3 m, and the state in which the surface was cracked or broken down was examined. There were neither cracking nor breakdown observed in the obverse and reverse sides of each molded article.

**Description for the Contracting State: BE**

Field of the invention

The present invention relates to a styrene-based resin composition which has excellent properties with respect to electromagnetic interference. More particularly, the invention relates to a styrene-based resin composition comprised of a styrene-based resin component and an aluminum component and optionally an electrically conductive carbon black.

Background of the invention

Radiation sources for electromagnetic waves have been increasing in number with continued advances in industrial technology and the general standard of living. The leakage of electromagnetic waves, therefore, has become a significant social problem since the wave can exert adverse influences on the human body. Such leakage may also cause the incorrect behavior of integrated circuits in electronic equipment. In particular, electromagnetic waves radiated from electronic computers and various office equipment exert adverse influences on television sets and audio equipment.

Even in the car industry, electronic devices are now used. For example, they are used in automatic controllers for various machines such as an engine, and further, in a speedmeter, a tachometer, and so forth. Several types of cars are now equipped with a microcomputer. In addition, electronic devices such as a telephone, a radio and a TV set are installed inside cars for the convenience of the driver. However, these electronic devices are liable to suffer from various operational difficulties under the influence of electromagnetic waves emanating from the engine compartment, or from a source outside the car.

Various methods have recently been used to shield such equipment against electromagnetic waves, and described in GB—A—1 073 567, GB—A—1 168 701, GB—A—1 195 076, GB—A—1 226 181 and GB—A—1 246 829; US—A—3 468 753; US—A—3 491 056, US—A—3 393 257, US—A—3 474 067, US—A—3 668 281, US—A—3 673 121, US—A—3 767 613, US—A—4 006 114 and US—A—4 234 469.

In general, since metals can absorb or reflect electromagnetic waves, they are effectively used as shielding materials for electromagnetic waves radiated from an electronic oven and various communication apparatuses. In addition, plastics with metals deposited thereon by vacuum metallizing method or arc spray coating method can be used for the same purpose. Furthermore, materials prepared by adding additives, e.g., carbon powder and metal powder, to plastics can be used.

Using metals alone or other materials coated with metals are disadvantageous in that the specific gravity is large, moldability is poor, the procedure of treatment is not simple, and the treatment cost is high. Similarly, a method of introducing additives is disadvantageous in that when these additives are added in small amounts, the effect cannot be exhibited sufficiently. However, when they are added in large amounts, the mechanical strength and moldability of the resulting molded article are seriously reduced although the effect can be exhibited.

Plastic molds are provided with a flash sprayed metal layer or an electrically conductive coating layer on the inner surface thereof for the purpose of shielding electromagnetic waves. The flash sprayed metal layer or the electrically conductive coating layer is separated from the plastic mold by the impulsive action of falling bodies. The thus-separated small pieces fall in the plastic mold, causing problems such as the break-down of electric circuits contained in the plastic mold and fire. Furthermore, containers for electronic devices, such as office machines must be flame resistant due to safety requirements. Accordingly, there is a need for a resin composition which is capable of providing a surface layer which is free from the separation and break-down caused by impulses. Further, the material must be flame resistant, have excellent workability, as well as electromagnetic wave-shielding ability.

In general, in order to increase the electromagnetic interference property of synthetic resins or rubbers, it is necessary to incorporate a large amount of electrically conductive carbon black in the resin. However, it is very difficult to provide flame resistance to compositions containing large amounts of carbon black. Even though additives such as halogen-containing organic compounds and antimony oxide are added to provide flame resistance, when the resulting composition is exposed to a flame in accordance with a flame resistance testing method (UL-94 Method: Underwriter Laboratories, U.S.A.), glowing due to carbonization of the carbon black is vigorous. Furthermore, the flame remains alive for a long period of time, and if other flammable substances are brought into contact with the flame, they will easily catch fire. Even if considerable amounts of flame retarders are added this tendency remains and it is quite difficult to eliminate these defects. Moreover, the addition of such large amounts of flame retarders to compositions

with carbon black incorporated thereinto reduces the electromagnetic interference properties since it results in a reduction in the proportion of carbon black, even if flame resistance can be provided. Therefore, it is not possible to obtain a composition with good electromagnetic interference properties which also has excellent flame resistance. Furthermore, the use of such large amounts of expensive flame retarders causes increased costs. In addition, a molded article prepared from the composition does not have mechanical characteristics which are suitable for practical use.

Summary of the invention

The present inventors have carried out extensive investigations to develop an electromagnetic wave-shielding thermoplastic resin composition which is free from the above-described disadvantages and which has excellent properties with respect to electromagnetic interference. As a result of these studies, the electromagnetic wave-shielding material of the present invention was found. The composition is comprised of:

(A) 40 to 90% by volume of a styrene-based resin component comprising (i) a styrene-based resin having at least 5% by weight of styrene, and (ii) 0 to 40% by weight of a rubber-like material,

(B) 10 to 60% by volume of an aluminum or aluminum alloy in a powdery, fibrous and/or flaky form (hereinafter referred to as "aluminum component"), or

(A) 40 to 90% by volume of the styrene-based resin component,

(B) the aluminum component, and

(C) an electrically conductive carbon black, wherein the proportions of the aluminum component and the electrically conductive carbon black in the composition is from 5 to 50% by volume, respectively, provided that the total proportion of the aluminum component and the electrically conductive carbon black is from 10 to 60% by volume.

One of the features of the invention is that aluminum component is used and it can be easily and uniformly mixed with styrene-based resins because its specific gravity is small compared with other metals. Further, because of its high flexibility, the aluminum component is less likely to damage a mixer, mold, or other equipment during the mixing and molding processes. In addition, the aluminum component has good moldability. Furthermore, aluminum is not corroded by moisture in air as are iron and other metals.

The electromagnetic wave-shielding material of the invention not only possesses excellent electromagnetic wave-shielding properties, but the following advantages.

(1) Light weight;

(2) Since the composition is composed of a styrene-based resin, it can be molded into any desired form;

(3) Mechanical characteristics such as bending strength and impact strength are good; and

(4) Fabrication costs normally required for the shielding treatments of electromagnetic waves (e.g., arc spray coating, electrical coating or plating of metals) are not required, which greatly reduces costs.

(5) When used in housing for electronic devices, it increases the heat dissipation efficiency in the inside thereof because of its high thermal conductivity.

(6) Since it is provided with electrically conductive properties, it is effective in eliminating difficulties created by static electricity—i.e., it has the effect of shielding static electricity.

Furthermore, the addition of a flame retardant into the styrene-based resin composition provides an electro-magnetic wave-shielding material having superior flame retardant properties (V-0 as determined by Underwriter's Laboratories (UL) Method No. 94 in 3.2 mm (1/8 inch) thickness).

Materials provided with flame retardant properties provide safety with respect to abnormal current in electronic devices.

Since the electromagnetic wave-shielding material of the invention possesses the above-described effects as well as excellent electromagnetic wave-shielding properties, it will have various applications. Typical uses are shown below:

(1) Housing materials for office equipment such as fascimile, a printer and a word-processor, and housing and structural materials for office computers and large-scale computers;

(2) Housing materials for electronic equipment such as a television set, a video system, a microwave oven, an air-conditioner and a sewing machine, and housing materials for communication equipments, various measuring instruments and medical instruments;

(3) Housing materials for control devices in connection with the engine power of a car, a meter display, a speed controller, a wiper-controlling unit, and a mirror-controlling unit;

(4) Prevention of noise for a car radio, a telephone, a television, and an illumination equipment;

(5) Protective cases for instruments used in cars;

(6) Panel housings for control instruments used in cars;

(7) Covers for electric wires in cars, home electric appliances, and office automation (OA) equipments (e.g., a furnace tube);

(8) Housing materials for control instruments such as NC machine tools and industrial robots.

Brief description of the drawings

Fig. 1 is a perspective view of a test specimen for use in the measurement of volume resistance,

wherein A and B (obverse and reverse surfaces) indicate surfaces on which an electrically conductive silver paint has been coated.

Fig. 2 is a perspective view of a box-like injection molded product produced in each example or comparative example.

Fig. 3 shows the radiation field strength of each of the printer housings produced in the Example 25 and Comparative Example 3. In Figure 3, the abscissa is a radiation frequency (MHz), and the ordinate, a radiation field strength (dBμV/m).

Detailed description of the invention

(A) Styrene-based resin

The molecular weight of the styrene-based resins which can be used in the present invention is generally from 10,000 to 1,000,000, preferably from 20,000 to 500,000, and the softening point is generally not lower than 20°C, preferably from 20 to 250°C. Further, the content of styrene is at least 5% by weight and preferably 10% by weight or more.

Styrene-based resins as used herein are broadly divided as follows:

(1) Styrene homopolymer and copolymers of styrene and other monomers, said styrene constituting a major component (hereinafter referred to as "styrene-based resins (A)").

(2) Impact resistance resins as prepared by reacting a rubber-like material as described hereinafter with styrene or styrene and other vinyl compounds (hereinafter referred to as "styrene-based resins (B)").

(3) Polymers as prepared by reacting polyphenylene ether with styrene, etc., or a mixture of styrene-based resins (A) and polyphenylene ether (hereinafter referred to as "styrene-based resins (C)").

These styrene-based resins (A), (B) and (C) may be used alone or in combination with each other. The total styrene content of the styrene-based resins is at least 5% by weight.

These styrene-based resins (A), (B) and (C) will hereinafter be explained in detail.

(1) Styrene-based resins (A)

Styrene-based resins (A) as used herein have in general a molecular weight of from 50,000 to 300,000 and include a styrene homopolymer and copolymers of styrene and organic compounds having a double bond, having a styrene content of at least 60% by weight. Typical examples of the double bond-containing organic compounds include ethylene, vinyl acetate, maleic anhydride, acrylonitrile, and methyl methacrylate. A method of production of these styrene-based polymers is well known, and they are widely used in a wide variety of applications. See *Encyclopedia of Polymer Science and Technology,* Vol. 13, p. 128.

(2) Styrene-based resins (B)

Styrene-based resins (B) as used herein are prepared by graft-polymerizing at least one member (hereinafter referred to as "rubber-like material") selected from the group consisting of butadiene-based rubber, acrylic acid ester-based rubber, ethylene/propylene-based rubber, and chlorinated polyethylene-based rubber, with styrene alone or a mixture of styrene and at least one vinyl compound selected from the group consisting of acrylonitrile and methyl methacrylate.

These rubber-like materials will hereinafter be explained in detail.

(a) Butadiene-based rubber

The term "butadiene-based rubber" is used herein to mean those rubbers composed mainly of butadiene i.e., containing 60% by weight or more of butadiene, including butadiene homopolymer rubber, and butadiene copolymer rubbers comprising butadiene and a small amount of styrene or acrylonitrile (e.g., SBR and NBR). The butadiene/styrene copolymer rubber may be a block copolymer rubber, or a random copolymer rubber. See *Encyclopedia of Polymer Science and Technology,* Vol. 2, p. 104 and p. 678.

(b) Acrylic acid ester-based rubber

This acrylic acid ester-based rubber is prepared by emulsion-polymerizing acrylic acid ester (e.g., butyl acrylate) and a small amount (usually 10% by weight or less) of different monomer (e.g., acrylonitrile) in the presence of a catalyst, e.g., persulfuric acid salt, and is usually called acryl rubber. See *Encyclopedia of Polymer Science and Technology,* Vol. 1 p. 226.

(c) Ethylene/propylene-based rubber

The term "ethylene/propylene-based rubber" is used herein to mean those multi-copolymerization rubbers including an ethylene/propylene copolymer rubber, and terpolymer rubbers composed mainly of ethylene and propylene and of small amounts (usually 10% by weight or less) of monomers, such as straight or branched diolefins containing two double bonds at the terminals thereof (e.g., 1,4-pentadiene, 1,5-hexadiene, and 3,3-dimethyl-1,5-hexadiene), straight or branched diolefins containing one double bond at the terminal hereof (e.g., 1,4-hexadiene and 6-methyl-1,5-heptadiene), and cyclic dienes or their derivatives (e.g., bicyclo[2,2,1]-heptene-2). The weight ratio of the ethylene monomer unit to the propylene monomer unit in the ethylene/propylene-based rubber is preferably from 30/70 to 70/30. These ethylene/propylene-based rubbers can be prepared by copolymerizing ethylene and propylene, or

ethylene, propylene, and the above-described monomers in the presence of a catalyst comprising a transition metal compound, an organoaluminum compound, and the like. See *Encyclopedia of Polymer Science and Technology,* Vol. 6, p. 359.

(d) Chlorinated polyethylene-based rubber

This chlorinated polyethylene-based rubber is prepared by chlorinating polyethylene powder or grains as described hereinafter in an aqueous suspension, or by chlorinating polyethylene dissolved in an organic solvent. It is preferred to use the chlorinated polyethylene-based rubber as prepared by chlorinating in an aqueous suspension. In general, the rubber is amorphous or crystalline chlorinated polyethylene having a chlorine content of from 20 to 50% by weight, with amorphous chlorinated polyethylene having a chlorine content of from 25 to 45% by weight being particularly preferred. The polyethylene as used herein includes an ethylene homopolymer and copolymers of ethylene and 10% by weight or less of α-olefins (usually containing 6 or less carbon atoms). The density is generally from 0.910 to 0.970 g/cc, and the molecular weight is from 50,000 to 700,000. See *Encyclopedia of Polymer Science and Technology,* Vol. 6, p. 432.

In preparing the styrene-based resins (B) of the invention, the Mooney viscosity of the rubber-like material is desirably from 20 to 140, with the range of from 30 to 120 being particularly suitable, although it varies depending on the type of the rubber-like material. These rubber-like materials are commercially produced and widely used in a wide variety of applications. Their method of production, characteristics and uses are well known (see, for example, S. Kanbara, *Goseigomu Handbook (Synthetic Rubber Handbook),* Asakura Shoten, Tokyo (1967)).

Styrene-based resins (B) as used herein are prepared by graft-polymerizing styrene alone or a mixture of styrene and at least one different vinyl compound (i.e., acrylonitrile and methyl methacrylate) onto the above-described rubbers. Graft-polymerization methods which can be used include a bulk polymerization method, a solution polymerization method, an emulsion polymerization method, an aqueous suspension method, and a combination thereof (e.g., a process in which, after bulk polymerization, aqueous suspension polymerization is performed). In general, the amount of the rubber-like material used in the preparation of 100 parts by weight of the styrene-based resin (B) is from 3 to 40 parts by weight and preferably from 5 to 35 parts by weight, with the range of from 5 to 30 parts by weight being particularly suitable. (There may be employed a process in which a relatively large amount of rubber-like material is used to prepare a graft polymer containing a large amount of rubber-like material, and the thus-prepared graft polymer is mixed with the above-described styrene, acrylonitrile, or methyl methacrylate homopolymer or copolymer resin. In this case, the amount of the rubber-like material used is calculated based on that of the resulting mixture including non-grafted rubber-like material). The molecular weight of the grafted parts consisting of styrene or a mixture of styrene and acrylonitrile and/or methyl methacrylate is usually from 1,000 to 300,000 and preferably from 2,000 to 200,000. In general, all of the monomer used are rarely bound to the rubber-like material, resulting in the formation of homopolymer or copolymer of the monomer. These homopolymers and copolymers are used as such without being separated from the graft copolymer. The content of styrene in the styrene-based resin (B) is preferably 20% by weight or more and particularly preferably 30% by weight or more.

Typical examples of the thus-prepared styrene-based resins (B) include:

impact-resistant styrene resin (HIPS resin) as prepared by graft-polymerizing styrene alone onto a butadiene homopolymer or a styrene/butadiene block or random copolymer rubber (SBR) (see *Encyclopedia of Polymer Science and Technology,* Vol. 13, p. 193);

acrylonitrile/butadiene/styrene terpolymer resin (ABS resin) as prepared by graft-copolymerizing styrene and acrylonitrile onto a butadiene homopolymer rubber, SBR, or acrylonitrile/butadiene copolymer rubber (NBR) (see *Encyclopedia of Polymer Science and Technology,* Vol. 1, p. 436);

methyl methacrylate/butadiene/styrene terpolymer resin (MBS resin) as prepared by graft-copolymerizing styrene and methyl methacrylate onto butadiene homopolymer rubber or SBR;

acrylonitrile/acrylic acid ester/styrene terpolymer resin (AAS resin) as prepared by graft-copolymerizing acrylonitrile and styrene onto acrylic acid ester-based rubber;

graft copolymer resin (AES resin) as prepared by acrylonitrile and styrene onto ethylene/propylene-based rubber;

graft copolymer resin (ACS resin) as prepared by graft-copolymerizing styrene and acrylonitrile onto chlorinated polyethylene-based rubber; and

graft copolymer resin (MCS resin) as prepared by graft-copolymerizing styrene and methyl methacrylate onto chlorinated polyethylene-based rubber.

(3) Styrene-based resins (C)

Styrene-based resins (C) as used herein are polymers as prepared by reacting styrene with polyphenylene ether (hereinafter referred to as "PPO") represented by the general formula (I) as described hereinafter, or mixtures of PPO and styrene-based resins (A) as described hereinbefore.

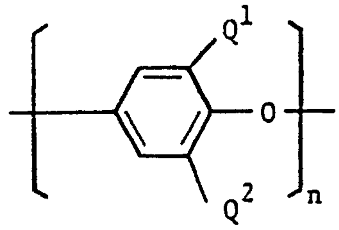

(I)

wherein $Q^1$ and $Q^2$ may be the same or different and are each an alkyl group containing from 1 to 4 carbon atoms, and n is a positive integer of at least 50, usually at least 100. See *Encyclopedia of Polymer Science and Technology,* Vol. 10, p. 92.

Typical examples of PPO include poly(2,6-dimethylphenylene-1,4-ether), poly(2,6 - diethylphenylene - 1,4 - ether), poly(2 - methyl - 6 - ethylphenylene - 1,4 - ether), poly(2 - methyl - 6 - propylphenylene - 1,4 - ether), poly(2,6 - dipropylphenylene - 1,4 - ether), poly(2 - methyl - 6 - butylphenylene - 1,4 - ether), and poly(2,6 - dibutylphenylene - 1,4 - ether). Of these compounds, poly(2,6 - dimethylphenylene - 1,4 - ether) is preferably used.

These styrene-based resins (C) can be prepared by graft-copolymerizing styrene alone, or styrene and at least one comonomer selected from the group consisting of styrene containing one or two alkyl groups, acrylonitrile, methyl methacrylate and butyl acrylate onto PPO.

The styrene-based resins (C) can also be prepared by mixing the above-described styrene-based resins (A) and PPO. The proportion of the styrene-based resin (A) in the resulting mixture is from 5 to 80% by weight and preferably from 10 to 70% by weight.

These styrene-based resins (A) to (C) may be used alone or in combination with the above-described rubber-like material. When the styrene-based resins are used in combination with the rubber-like material, the proportion of the rubber-like material in the styrene-based resin/rubber-like material mixture is 40% by weight or less and preferably 35% by weight or less. The styrene-based resins and the styrene-based resin/rubber-like material mixture are herein referred to merely as "styrene-based resin component".

(B) Aluminum component

The mean size of the powdery aluminum or aluminum alloy is generally from 250 to 20 mesh. The diameter of the fibrous aluminum or aluminum alloy is generally from 0.0020 to 0.50 mm, and a fibrous aluminum or aluminum alloy having a length of 10 mm or less is preferred since it is easy to work with. Flaky aluminum or aluminum alloy may be in a form such as circular, triangular, square, rectangular, hexagonal or like form having a surface area of from 0.1×0.1 mm to 5×5 mm. A flaky aluminum or aluminum alloy having a thickness of 0.1 mm or less is particularly preferred. In particular, a flaky aluminum or aluminum alloy having a square form with a surface area of about 1×1 mm, and a thickness of about 0.03 mm has good dispersibility in the styrene-based resin component and does not become entangled unlike aluminum fibers, not forming any entangled material. Furthermore, these aluminum flakes have a strong tendency of orientating in the direction in which the impact resistant resin flows during molding. When used in the same amount, therefore, the composition containing aluminum flakes not only has good electric conductivity, but also is improved with respect to flexural modulus of elasticity compared with the composition containing aluminum fibers. In particular, aluminum flakes having a surface area of 1 mm×1 mm is most preferred from a viewpoint of dispersion properties.

The powdery, fibrous and flaky aluminum or aluminum alloys may be used alone. However, it is suitable to use them in combination with each other because the effect of the invention can be obtained at a low mixing ratio. The aluminum content of the aluminum alloy is usually at least 80% by weight.

(C) Carbon black

The electrically conductive carbon black as used herein generally has a specific surface area of from 20 to 1,800 $m^2/g$, as determined by the low temperature nitrogen absorption method (see ASTM D3037—78) and the BET method, and a pore volume of from 1.5 to 4.0 ml/g as determined by the mercuryl pressure-introduction method (see *Powder Technology,* Vol. 29 (1), pp. 45—52, 1981) within the pore diameter of from 30 to 7,500 Å. In particular, carbon black having a specific surface area of from 200 to 1,200 $m^2/g$ can be effectively used in the invention.

The carbon black includes channel black, acetylene black, and carbon black produced by the furnace black method. Of these, carbon black produced by the furnace black method is particularly preferred because it has good dispersibility and does not reduce mechanical strength of the resulting composition. The method of production, physical properties, etc., of such carbon blacks are well known as described in Carbon Black Association ed., *Handbook of Carbon Black,* Tosho Shuppan, Tokyo (1972), *Handbook of Rubber/Plastic Compounding Chemicals*, Rubber Digest Co., Ltd., Japan (1974), and *Encyclopedia of Polymer Science and Technology,* Vol. 2, pp. 820—836.

In view of strict regulations for flame retardant properties, it is preferred to further incorporate halogen-containing organic compounds and antimony oxide as described hereinafter into the styrene-based resin composition. Into the composition, it is preferred to further incorporate hydrous inorganic substances as well as the halogen-containing organic compounds and antimony oxide.

(D) Halogen-Containing organic compound and antimony oxide

Halogen-containing organic compounds which are used in the invention are widely known as flame retardants. Of these flame retarders, those having a halogen content of from 20 to 90% by weight, preferably from 30 to 90% by weight, more preferably from 40 to 85% by weight are preferred. In particular, those having a melting point of 200°C or less and a boiling point of at least 300°C are suitable. The halogen-containing organic compounds are liquid or solid at room temperature (20°C), and particularly those having a decomposition initiating temperature or a boiling point of at least 200°C are preferred. The molecular weight of halogen-containing organic compounds are generally from 500 to 5,000 and preferably from 500 to 4,000. Preferred examples of such halogen-containing organic compounds are chlorine-containing compounds and bromine-containing compounds. Typical preferred examples are tetrachlorophthalic anhydride, chlorinated paraffin, chlorinated bisphenol A, brominated bisphenol S, chlorinated diphenyl, brominated diphenyl, chlorinated naphthalene, tris(β-chloroethyl)phosphate and tris(dibromobutyl)phosphate.

The antimony oxide as used herein is generally used as a flame-retardant aid for the above-described halogen-containing organic compound. Preferred examples are antimony trioxide and antimony pentaoxide.

These halogen-containing organic compounds and antimony oxide are well known as described in the above described *Handbook of Rubber/Plastic Compounding Chemicals* and *Encyclopedia of Polymer Science and Technology,* Vol. 7, p. 1.

(E) Hydrous inorganic substance

The hydrous inorganic substance as used herein has a bound water content of from 10 to 80% by weight and a true specific gravity of from 1.0 to 5.0. Hydrous inorganic substances capable of releasing water at 150 to 500°C, particularly 200 to 450°C, are preferably used for the purpose of the invention. Typical examples of such hydrous inorganic substances are hydrates of Group IIA, IIB and IIIB metals and salts containing such metals. Examples include compounds containing water in the molecule thereof, e.g., magnesium hydroxide, calcium hydroxide, aluminum hydroxide ($Al_2O_3$ $nH_2O$), hydrous gypsum, kaolin clay, calcium carbonate, hydrotalcite, basic magnesium carbonate, magnesium borate, and precipitated sulfate of barium, magnesium or calcium. These hydrous inorganic substances are insoluble in water, and the solubility in 100 ml of water at 20°C is generally 10 g or less, preferably 1 g or less, and especially preferably 0.1 g or less. Preferred hydrous inorganic substances include aluminum hydroxide, hydrous gypsum, magnesium hydroxide, calcium carbonate, basic magnesium carbonate, and precipitated magnesium or calcium sulfate. See *Encyclopedia of Polymer Science and Technology,* Vol. 7, p. 740.

The antimony oxides and hydrous inorganic substances which can be used in the present invention generally have an average particle size of 0.1 to 100 μm, preferably 0.2 to 50 μm, more preferably 0.3 to 40 μm.

When the styrene-based resin composition comprised of the styrene-based resin component and the aluminum component is prepared, the proportion of the styrene-based resin component in the composition is from 40 to 90% by volume, preferably from 45 to 85% by volume, and the proportion of the aluminum component is from 10 to 60% by volume, preferably 15 to 55% by volume. When the proportion of the aluminum component contained is less than 10% by volume, no sufficient electrical conductivity necessary for electromagnetic wave-shielding can be obtained. On the other hand, when the proportion of the aluminum component is more than 60% by volume, it becomes difficult to uniformly mix the aluminum component with the styrene-based resin component and even if a uniform composition is prepared, the resulting composition does not have sufficient strength for practice use.

When the styrene-based composition which further contains the electrically conductive carbon black is prepared, the proportion of the styrene-based resin component contained in the composition is from 40 to 90% by volume and preferably from 50 to 85% by volume. The proportion of the aluminum component contained in the composition is from 5 to 50% by volume and preferably from 10 to 45% by volume. The proportion of the electrically conductive carbon black contained is from 5 to 50% by volume and preferably from 10 to 45% by volume.

When the proportion of the electrically conductive carbon black is less than 5% by volume, no sufficient electrical conductivity necessary for electromagnetic wave-shielding can be obtained. On the other hand, when the electrically conductive carbon black is added in greater amounts than 50% by volume, it becomes difficult to uniformly mix the carbon black with the styrene-based resin component, and the resulting resinous layer does not have sufficient strength for practical use.

Incorporation of the aluminum component into the styrene-based resin composition is not only performed for the purpose of increasing the electromagnetic wave-shielding performance, but also is intended to achieve multiple scattering of electromagnetic waves on the surface of the aluminum component.

In order to enhance the synergistic effect of the electrically conductive carbon black and aluminum component, it is necessary to add the aluminum component in a proportion of at least 5% by volume. When the proportion of the aluminum component added is less than 5% by volume, the synergistic effect of the carbon black and aluminum component is decreased. On the other hand, when it is more than 50%

by volume, it becomes impossible to uniformly mix the aluminum component with the styrene-based resin component.

One of the features of the invention is that in the styrene-based resin composition, the aluminum component is used in combination with the electrically conductive carbon black, and the total proportion of the aluminum component and the electrically conductive carbon black is from 10 to 60% by volume. Particularly it is preferred for the total proportion to be within the range of from 10 to 50% by volume. In connection with the volume ratio of aluminum component to electrically conductive carbon black, it is preferably within the range of from 4.0/1 to 1/4.0. It has been found that by mixing the electrically conductive carbon black having the electromagnetic wave-shielding effect at a high frequency region (MHz) and the aluminum component having the electromagnetic wave-shielding effect at a low frequency region (KHz), the resulting mixture is allowed to have the electromagnetic wave-shielding effect over a wider frequency region, and that even at a region where the electromagnetic wave-shielding effect is almost not exhibited when the aluminum component or electrically conductive carbon black is used alone, if they are used in combination with each other, the electromagnetic wave-shielding effect can be exhibited very significantly. Although the exact reason for such significant effect is not known, it is considered that electromagnetic wave energy reflected by or absorbed in the aluminum component is grounded through the electrically conductive carbon black. This is supported by the fact that when the aluminum component is used in combination with the electrically conductive carbon black, the electric conductivity of the composition of the invention is greatly increased.

When the total proportion of aluminum component and electrically conductive carbon black contained in the styrene-based resin composition is less than 10% by volume, its electromagnetic wave-shielding effect is poor particularly at a low frequency region. On the other hand, when the proportion is more than 60% by volume, the moldability of the resulting composition is undesirably decreased.

The halogen-containing organic compound and the antimony oxide may be added in the styrene-based resin composition in an amount of 5 parts by weight or more respectively, per 100 parts by weight of the total amount of the styrene-based resin component, aluminum component and electrically conductive carbon black. The total proportion of the halogen-containing organic compound and antimony oxide is preferably from 10 to 45 parts by weight and more preferably from 15 to 45 parts by weight. The proportion of antimony oxide per halogen element contained in 100 parts by weight of the halogen-containing organic compound is usually from 100 to 600 parts by weight and preferably from 100 to 400 parts by weight. In view of flame retardant properties and bleeding, it is suitably from 150 to 400 parts by weight.

In addition to the processings to make a product flame-resistant by the use of the flame retardants (halogen-containing organic compounds and antimony oxide), hydrous inorganic substances can be added in order to improve moldability and to provide high flame resistance (V-0 as determined by the UL-94 method). The proportion of the hydrous substance added is 50 parts by weight or less, preferably 45 parts by weight or less, per 100 parts by weight of the total amount of the styrene-based resin component, aluminum component and electrically conductive carbon black. The addition of the hydrous inorganic substance in a proportion of at least 5 parts by weight, preferably at least 10 parts by weight, and more preferably at least 20 parts by weight, per 100 parts by weight of the electrically conductive carbon black, is preferred because it permits the production of a composition having good flame resistance, mechanical characteristics, and moldability.

In the preparation of the styrene-based resin composition of the invention, all ingredients may be mixed at the same time, or some of the ingredients may be previously mixed to form a mixture, which is in turn mixed with the remaining ingredients (for example, the styrene-based resin component is previously mixed with the electrically conductive carbon black, and the resulting mixture is then mixed with the aluminum component). Furthermore, there may be employed a process in which part of the styrene-based resin component is previously mixed with all or part of the aluminum component and/or electrically conductive carbon black to form a master batch, and the thus-formed master batch is then mixed with the remaining ingredients.

In producing the styrene-based resin composition of the invention, stabilizers against oxygen, heat and light, metal deterioration-preventing agents, fillers, lubricants, and other additives, which are generally used in the field of styrene-based resins, can be further added.

In the preparation of the styrene-based resin composition, the necessary ingredients may be dry-blended by the use of a mixer, e.g., a Henschel mixer, which is generally used in processing of styrene-based resins, or may be molten-kneaded by the use of a mixer, e.g., a Banbury mixer, a kneader, a roll mill, and a screw type extruder. By dry-blending the ingredients and then, molten-kneading the resulting composition (or mixture), a uniform composition can be obtained. In this case, in general, the composition (or mixture) thus molten-kneaded is pelletized and supplied to the subsequent molding process.

Both the molten-kneading and molding should be performed at temperatures higher than the softening point of the styrene-based resin component used. Since, however, thermal degradation of part of the styrene-based resin component may occur if the molten-kneading and molding are performed at higher temperatures than 300°C, they should be, of course, performed at temperatures lower than that at which the thermal degradation occurs. In molten-kneading kneading and molding, therefore, processing

temperature of the styrene-based resin component varies depending upon the kind of styrene-based resin component used. Typical processing temperatures of the styrene-based resins are shown below.

| | Processing temperature (°C) | (Preferred temperature) (°C) |
|---|---|---|
| Styrene-based Resins (A) | 180—250 | (200—250) |
| Styrene-based Resins (B) | " | ( " ) |
| Styrene-based Resins (C) | 180—300 | (200—300) |

Molding methods which can be used include an extrusion molding method, an injection molding method, and a press molding method. In addition, molding methods which are generally used in the field of styrene-based resins, such as a stamping method, a press molding method using an extruded sheet, and a vacuum molding method, can be used.

The thus-prepared styrene-based resin composition of the invention can be shaped into various forms because of its excellent moldability and can be used in various applications.

The present invention will hereinafter be explained in detail by reference to the examples and comparative examples as described hereinafter.

In the examples and comparative examples, various physical properties were measured according to tests defined in ASTM as follows:

| Physical properties | ASTM |
|---|---|
| Flow rate | D1238—79 under Condition N |
| Izod impact strength | D256—56 |
| Tensile strength | D2638—72 |
| Bending strength | D790—71 |
| Young's modulus in flexure | D790 |
| Vicat softening point | D1528—58T |

Further the volume resistivity and the effect of shielding electromagnetic waves were also measured as follows:

Volume resistivity: An electrically conductive silver paint was coated on both the obverse and reverse surfaces of each of parts A and B (both having a width of 1 cm) of a molded article (having a length of 3 cm and a width of 1 cm) as shown in Fig. 1. After the paint was fully dried, the resistance between the paint-coated spots for each of parts A and B was measured by the use of a tester (SANWA SR-3TR, manufactured by Sanwa Denki Keiki Co., Ltd.). The thus-measured value was divided by the thickness, t, to obtain the volume resistivity. This volume resistivity is indicated in the unit of $\Omega \cdot$ cm.

Effect of shielding electromagnetic waves: A box as shown in Fig. 2 was produced, (depth: 100 mm, width: 120 mm, length: 290 mm and thickness: 3 mm), in which was placed a portable oscillator adjusted in frequency to 600 MHz. This box was placed in an electric wave shielded place, and the electric waves from the oscillator were received by means of a receiving antenna and measured by means of a wattmeter for microwaves. Similarly, the electric waves from the oscillator, not placed in the box, were measured as a control. The ratio of the former field strength (μV) to the latter (control) field strength (μV) was expressed in decibel (dB), and indicated as an electromagnetic wave attenuation amount of the sample sheet.

The styrene-based resin, rubber-like material, aluminum flake, aluminum powder, aluminum fiber, electrically conductive carbon black, halogen-containing organic compound, antimony oxide, and hydrous inorganic substance as used in the examples and comparative examples are as follows:

Styrene-based resin (PS)

Styrene was suspended in water and, after addition of an emulsifier and a catalyst, polymerized at a temperature of 90°C to prepare a styrene resin having a flow index of 1.30 g/10 min. This styrene resin is designated as "PS".

Styrene-based resin (HIPS)

Styrene (92 parts by weight) was graft-copolymerized onto 8.1 parts by weight of a styrene-butadiene

random copolymer rubber (styrene content: 25.3% by weight; Mooney viscosity ($ML_{1+4}$): 25) to prepare a high impact polystyrene having a flow index of 13.0 g/10 min. This high impact polystyrene is designated as "HIPS".

ABS Resin

A 20-liter autoclave made of stainless steel was charged with 280.0 g (as solids) of a styrene-butadiene copolymer rubber (butadiene content: 80% by weight; gel content of rubber: 80%), 2.0 g of ammonium persulfate, 80.0 g of sodium rosinate for disproportionation, 21.0 g of laurylmercaptan, and 8.0 l (liters) of water. They were uniformly mixed, and 2,520 g of styrene and 1,200 g of acrylonitrile were added thereto. The resulting mixture was stirred, and then, raised in temperature to 70°C while stirring. At this temperature, polymerization was performed with stirring for 10 hours. To the thus-prepared polymer (grafted product)-containing latex-like material was added a 5% aqueous solution of aluminum sulfate to coagulate the grafted product. The coagulated product was washed with about 5,200 ml of an about 1% aqueous solution of sodium hydroxide, and further, with a large amount (about 30 liters) of hot water maintained at 70°C. The grafted product was dried at about 80°C under reduced pressure for about 24 hours. There was thus obtained 3,785 g of white powdery grafted product. The Izod impact resistance of the grafted product was 7.5 Kg-cm/cm-notch, and its tensile strength was 468 kg/$cm^2$. The Vicat softening point of the polymer was 101.5°C. The rubber-like material content of the grafted product was 7.3% by weight. This grafted product is hereinafter referred to as "ABS".

MBS Resin

A 20-liter autoclave made of stainless steel was charged with about 12,000 ml of an aqueous dispersion containing 1,380 g of a butadiene-styrene copolymer rubber (Mooney viscosity: 50) consisting of 76.5% by weight of butadiene and 23.5% by weight of styrene. An aqueous solution of 480 g of sodium formaldehydesulfoxylate dihydrate dissolved in about 2,400 ml of water, and 160.0 g of cumene hydroperoxide were added in a stream of nitrogen while maintaining the temperature at 60°C. The mixture was stirred for 1 hour. Then, a mixture of 7,680 g of methyl methacrylate and 32.0 g of cumene hydroperoxide was added, and polymerization was allowed to proceed. After about 7 hours, the polymerization conversion ratio was 91.8%. Thereafter, a mixture of 6,880 g of styrene and 32.0 g of cumene hydroperoxide was added, and polymerization was allowed to proceed. After about 6 hours, the polymerization conversion ratio was 93.3%. To the resulting reaction solution were added an aqueous solution of hydrochloric acid and sodium chloride (salt) to coagulate it. The thus-obtained precipitate was filtered off, thoroughly washed with hot water, and then, dried at a temperature of about 80°C under reduced pressure for about 24 hours. There was thus obtained a white powdery polymer (grafted product). The Izod impact strength of the grafted product was 7.6 kg · cm/cm-notch, and its tensile strength was 415 kg/$cm^2$. The Vicat softening point of the grafted product was 97.2°C. The rubber-like material content of the grafted product (hereinafter referred to as "MBS") was 9.6% by weight.

AAS Resin

A 20-liter autoclave made of stainless steel was charged with about 8,000 ml of distilled water, 24.0 g of sodium dodecylbenzene sulfonate, 0.80 g of ammonium persulfate as a polymerization catalyst, and as monomers, 784 g of butyl acrylate and 16.0 g of glycidyl methacrylate. Polymerization was performed at 77°C with stirring until the monomers are almost completely polymerized to prepare acrylic acid ester-based rubber. To the polymerization system containing the acrylic acid ester-based rubber were added 1,680 g of styrene and 720 g of acrylonitrile as monomers, and 16.0 g of potassium persulfate as a polymerization catalyst, and polymerization was performed at 83°C for 10 hours while stirring. There was thus obtained an emulsion polymer (grafted product) containing almost no unreacted monomers. When a 5% aqueous solution of aluminum sulfate was added dropwise to the above-obtained grafted product-containing emulsion while stirring, the polymer (grafted product) precipitated. This water-containing polymer was then centrifugated to remove the water, and the polymer was fully washed with water and dried at about 50°C under reduced pressure for about 24 hours. The Izod impact strength of the grafted product was 24.8 kg · cm/cm-notch, and its tensile strength was 350 kg/$cm^2$. The softening point was 97.6°C. The rubber-like material content of the grafted product (hereinafter referred to as "AAS") was 23.8% by weight.

AES Resin

A 20-liter autoclave made of stainless steel was charged with 5,350 g of styrene as a monomer, 1,500 g of an ethylene-propylene-diene terpolymer rubber (Mooney viscosity $ML_{1+4}$(100°C)): 45; unconjugated diene component: ethylidenenorbornene; iodine value: 25) as a rubber-like material, and 1.0 kg of n-heptane. After the air in the autoclave was replaced by nitrogen, the mixture was stirred at 50°C for 2 hours to completely dissolve the ethylene-propylene-diene terpolymer rubber in styrene. To this reaction (polymerization) system was added 2,150 g of acrylonitrile as a monomer, and the resulting mixture was fully stirred to form a uniform solution. To the uniform solution were added 5.0 g of terpinolene and, as a catalyst, a mixture of 5.0 g of di-tert-butyl peroxide and 1.3 g of tert-butyl peracetate. The resulting polymerization system was raised in temperature to 97°C. Bulk polymerization was performed for 7 hours

and 20 minutes at a nitrogen pressure of 1 kg/cm$^2$ while maintaining the temperature at 97°C. About 30 minutes before the completion of the polymerization, a solution of 15.0 g of di-tert-butyl peroxide and 15.0 g of terpinolene dissolved in 500 g of styrene was added to the reaction mixture. The thus-formed syrup (containing polymer) was transferred to a 30-liter autoclave in which 11 liters of water (containing 25 g of an acrylic acid-acrylic acid ester copolymer as a suspension) had been placed, and nitrogen was passed through the autoclave to displace the air. This aqueous suspension was subjected to suspension polymerization for 2 hours with vigorous stirring at 130°C. The reaction mixture was then raised in temperature to 150°C and was subjected to stripping for 1 hour. The thus-obtained polymer (graft-blended product) was fully washed with water and dried at 100°C for about 24 hours. There was thus obtained 9.28 kg of a grafted product (hereinafter referred to as "AES"). The rubber-like material content of this AES was 16.0% by weight. The Izod impact strength of the AES was 37.9 kg · cm/cm-notch, and its tensile strength was 350 kg/cm$^2$. The Vicat softening point was 98.0°C.

ACS(1) Resin

A 20-liter autoclave was charged with 1,600 g of chlorinated polyethylene (Mooney viscosity: 76; chlorine content: 40.6% by weight; hereinafter referred to as "Cl-PE(a)"), 32.0 g of polyvinyl alcohol (degree of saponification: 95%), and about 8.0 liters of water (ion exchanged water), which were then vigorously stirred at room temperature (about 23°C). To the thus-formed dispersion were added 4,560 g of styrene and 1,520 g of acrylonitrile as monomers, 320 g of fluid paraffin as a lubricant, 16.0 g of tert-butyl peracetate as a polymerization initiator, and 16.0 g of tert-dodecylmercaptan as a chain transfer agent. The air above the suspension of the reaction system was displaced by nitrogen gas, and the temperature was then raised to 105°C. While stirring at this temperature, polymerization was performed for 4 hours, and further, it was performed at 145°C for 2 hours. The reaction system was allowed to cool to room temperature. The thus-obtained polymer (grafted product) was filtered off and fully washed with water. The grafted product was then dried at 50°C under reduced pressure for about 24 hours. The polymerization conversion (based on the monomers used in the polymerization) was 95.4%, and the product was in the form of slightly coarse powder. The rubber-like material content of the grafted product (hereinafter referred to as "ACS(1)" was 20.3% by weight.

ACS(2) Resin

The polymerization was carried out by the same condition as in the preparation of ACS(1), except that the amount of Cl-PE(a) was changed to 6.0 kg, the amount of styrene was changed to 1,280 g and the amount of acrylonitrile was changed to 320 g. After the termination of the polymerization, the thus-obtained polymer was filtered off, washed with water and dried in the same conditions as in the purification of ACS(1). The polymerization conversion of the thus-obtained grafted product (hereinafter referred to as "ACS(2)") was 95.3% and the product was in the form of slightly coarse powder. The rubber-like material content of the grafted product was 79.6% by weight.

Mixtures (1) and (2)

2,6-Xylenol was subjected to polycondensation by an oxidative coupling method to produce poly(2,6-dimethylphenylene-1,4-ether) (inherent viscosity (as determined at 30°C in chloroform; unit: dl/g): 0.53; hereinafter referred to as "PPO"). Then, 100 parts by weight of PPO, 25 parts by weight of a styrene monomer, 10 parts by weight of PS as prepared hereinbefore, and 2.1 parts by weight of di-tert-butyl peroxide were mixed in a Henschel mixer for 10 minutes and, thereafter, a styrene-grafted PPO mixture was produced by the use of a twin screw extruder (diameter: 30 mm; resin temperature; 270°C). This mixture was designated as "Mixture (1)".

In the same manner as in the production of Mixture (1), 50 parts by weight of Mixture (1) and 50 parts by weight of PS were dry-blended. The thus-obtained mixture was melted and kneaded in an extruder (diameter: 40 mm; resin temperature: 260°C) to produce a mixture (hereinafter referred to as "Mixture (2)").

Mixtures (3) to (5)

To 70 parts by weight of an acrylonitrile-styrene copolymer resin (acrylonitrile content: 23% by weight; hereinafter referred to as "AS") were added, as a rubber-like material, chlorinated polyethylene (chlorine content: 31.6% by weight; Mooney viscosity ($MS_{1+4}$): 78) as prepared by chlorinating an ethylene-butene-1 copolymer (molecular weight: about 250,000; density: 0.931 g/cm$^3$) in an aqueous suspension form, the same butadiene-styrene copolymer rubber (hereinafter referred to as "SBR") as used in the production of the MBS resin, and the same ethylene-propylenediene terpolymer rubber as used in the production of the AES resin, all being used in an amount of 30 parts by weight, and melted and kneaded in a 60-liter Banbury mixer (resin temperature: 180°C) to produce Mixtures (3), (4) and (5), respectively.

Aluminum flake

Square flake-like aluminum (hereinafter referred to as "Al flake") having a cross-sectional area of 1 mm×1 mm and a thickness of 0.03 mm was used.

Aluminum powder

Aluminum powder (hereinafter referred to as "Al powder") having a grain size of from 74 to 150 μm was used.

Aluminum fiber

As an aluminum fiber, an aluminum fiber (hereinafter referred to as "Al fiber") having a length of about 6 mm and a diameter of 65 μm was used.

Electrically conductive carbon black

Furnace black (produced by Cabot Corp., U.S.A. under the trade name of Vulcan XC-73; density: about 1.8 g/ml; surface area: 200 $m^2/g$; hereinafter referred to as "C.B.") having a mean grain size of about 30 μm was used.

Halogen-containing organic compound

As a halogen-containing organic compound, decabromodiphenyl oxide (melting point: 304°C; average particle size: 3 μm; bromine content: about 82% by weight: hereinafter referred to as "DBPO") was used.

Antimony oxide

Antimony trioxide (melting point: 656°C; average particle size 0.5 μm; hereinafter referred to as "$Sb_2O_3$") having a density of 5.25 $g/cm^3$ was used as antimony oxide.

Hydrous inorganic substance

As hydrous inorganic substance was used finely pulverized magnesium silicate (density: 2.75 $g/cm^3$; specific surface area: 20 $m^2/g$; grain diameter: 0.32—6 microns; $SiO_2$ content: 62.5% by weight; MgO content: 30.6% by weight; $H_2O$ content: 4.99% by weight; hereinafter referred to as "MgO $SiO_2$").

Examples 1 to 26 and Comparative Examples 1 to 6

Styrene-based resins, Al flake, Al powder, and Al fiber as Al component, and C.B. as electrically conductive carbon black were used and previously dry-blended in the proportions shown in Table 1 in a Henschel mixer for 5 minutes. The thus-prepared mixtures were each melted and kneaded at a resin temperature of 230°C in a twin-screw extruder (diameter: 30 mm) and extruded therefrom to produce the respective pellets. The pellets obtained were each molded (resin temperature: 230°C) to obtain test samples (thickness: 3 mm) using an extruder or an injection molding machine.

The volume resistivity and the electromagnetic attenuation amount of respective samples obtained were measured and the results are shown in Table 2.

TABLE 1

| Example No. | Styrene-based resin | | | | Al Component | | Amount of C.B. Compounded[1] |
|---|---|---|---|---|---|---|---|
| | Type | Amount[1] | Type | Amount[1] | Type | Amount[1] | |
| 1 | HIPS | 90 | — | 0 | Al flake | 10 | 0 |
| 2 | " | 80 | — | 0 | " | 20 | 0 |
| 3 | " | 60 | SBR | 10 | " | 30 | 0 |
| 4 | PS | 50 | " | 20 | " | " | 0 |
| 5 | AAS | 60 | AES | " | " | 20 | 0 |
| 6 | ACS (1) | 80 | — | 0 | " | " | 0 |
| 7 | Mixture (1) | " | — | 0 | " | " | 0 |
| 8 | " (2) | " | — | 0 | " | " | 0 |
| 9 | " (3) | " | — | 0 | " | " | 0 |
| 10 | " (4) | " | — | 0 | " | " | 0 |
| 11 | " (5) | " | — | 0 | " | " | 0 |

[Note][1]: % by volume

TABLE 1 (Cont'd)

| Example No. | Styrene-based Resin | | | | Al Component | | Amount of C.B. Compounded[1] |
|---|---|---|---|---|---|---|---|
| | Type | Amount[1] | Type | Amount[1] | Type | Amount[1] | |
| 12 | HIPS | 50 | SBR | 20 | Al fiber | 30 | 0 |
| 13 | " | 40 | " | " | Al powder | 40 | 0 |
| 14 | Mixture (1) | 70 | — | 0 | " | 30 | 0 |
| 15 | HIPS | 80 | — | 0 | Al flake | 10 | 10 |
| 16 | " | 60 | SBR | 10 | " | 15 | 15 |
| 17 | " | 50 | " | " | " | 20 | 20 |
| 18 | " | 60 | " | " | " | 10 | " |
| 19 | " | 70 | — | 0 | " | 20 | 10 |
| 20 | " | 60 | SBR | 10 | Al fiber | 15 | 15 |
| 21 | " | 50 | " | " | Al powder | 20 | 20 |
| 22 | ABS | 70 | " | " | Al flake | 15 | 15 |
| 23 | MBS | 60 | " | 10 | " | " | " |
| 24 | ACS (2) | 70 | — | — | " | " | " |
| 25 | Mixture (1) | " | — | — | " | " | " |
| 26 | " (2) | " | — | — | " | " | " |
| Comparative Example 1 | HIPS | 97 | — | 0 | Al flake | 3 | 0 |
| 2 | " | 20 | SBR | 10 | Al powder | 70 | 0 |
| 3 | " | 92 | — | 0 | Al flake | 3 | 5 |
| 4 | " | 20 | — | 0 | Al powder | 60 | 20 |
| 5 | " | " | — | 0 | Al flake | 20 | 60 |
| 6 | Mixture (1) | 30 | — | 0 | " | 70 | 0 |

[Note][1]: % by volume

TABLE 2

| Example No. | Volume resistivity (Ω · cm) | Electromagnetic attenuation amount (dB) |
|---|---|---|
| 1 | $10^2$ | 18 |
| 2 | $10^1$ | 20 |
| 3 | $10^0$ | 24 |
| 4 | $10^0$ | 22 |
| 5 | $10^1$ | 17 |

TABLE 2

| Example No. | Volume resistivity (Ω · cm) | Electromagnetic attenuation amount (dB) |
|---|---|---|
| 6 | $10^1$ | 16 |
| 7 | $10^1$ | 17 |
| 8 | $10^1$ | 17 |
| 9 | $10^1$ | 16 |
| 10 | $10^1$ | 16 |
| 11 | $10^1$ | 15 |
| 12 | $10^0$ | 22 |
| 13 | $10^0$ | 25 |
| 14 | $10^0$ | 24 |
| 15 | $10^0$ | 27 |
| 16 | $10^0$ | 29 |
| 17 | $10^0$ | 37 |
| 18 | $10^0$ | 35 |
| 19 | $10^0$ | 36 |
| 20 | $10^0$ | 30 |
| 21 | $10^0$ | 34 |
| 22 | $10^0$ | 32 |
| 23 | $10^0$ | 34 |
| 24 | $10^0$ | 32 |
| 25 | $10^0$ | 30 |
| 26 | $10^0$ | 33 |
| Comparative Example 1 | $10^{15}$ | 2 |
| 2 | $10^0$ | — |
| 3 | $10^{15}$ | 5 |
| 4 | $10^0$ | — |
| 5 | $10^0$ | — |
| 6 | $10^0$ | — |

[Note] —: No sample was prepared.

It is apparent from the results in Table 2 that the styrene-based resin composition of the invention has excellent properties with respect to electromagnetic interference.

Examples 27 to 40 and Comparative Examples 7 to 11

Styrene-based resins, Al flake, Al powder and Al fiber as Al component and C.B. and $Sb_2O_3$, DBPO and $MgO \cdot SiO_2$ as flame retardants were used and previously dry-blended in the proportions shown in Table 3 in a Henschel mixer for 5 minutes. The thus-prepared mixtures were each melted and kneaded at a resin temperature of 230°C by the use of a twin-screw extruder (diameter: 30 mm), and extruded therefrom to produce the respective pellets. Samples were obtained in the same manner as in Example 1 using each pellet. The flame resistance, volume resistivity and electromagnetic attenuation amount were measured and the results are shown in Table 4.

TABLE 3

| Example No. | Styrene-based Resin | | | | Al Component | | Amount of C.B. Compound[1] | Amount of $Sb_2O_3$[2] | Amount of DBPO[2] | Amount of $MgO \cdot SiO_2$[2] |
|---|---|---|---|---|---|---|---|---|---|---|
| | Type | Amount[1] | Type | Amount[1] | Type | Amount[1] | | | | |
| 27 | HIPS | 80 | — | 0 | Al flake | 20 | 0 | 8 | 10 | 0 |
| 28 | " | 60 | SBR | 10 | " | 30 | 0 | " | " | 0 |
| 29 | ACS (1) | 80 | — | 0 | " | 20 | 0 | " | 8 | 0 |
| 30 | Mixture (1) | " | — | 0 | " | " | 0 | " | 10 | 0 |
| 31 | " (2) | " | — | 0 | " | " | 0 | " | " | 0 |
| 32 | HIPS | " | — | 0 | Al fiber | " | 0 | " | " | 0 |
| 33 | " | " | — | 0 | Al powder | " | 0 | " | " | 0 |
| 34 | " | " | — | 0 | Al flake | 10 | 10 | " | " | 10 |
| 35 | " | 60 | SBR | 10 | " | 15 | 15 | " | " | 12 |
| 36 | " | 50 | " | " | " | 20 | 20 | " | " | 15 |
| 37 | " | 65 | — | 0 | Al powder | " | 15 | " | " | " |
| 38 | Mixture (1) | 70 | — | 0 | Al flake | 15 | " | " | " | 12 |
| 39 | " (2) | " | — | 0 | " | " | " | " | " | " |
| 40 | " (3) | " | — | 0 | " | " | " | " | " | " |
| Comparative Example 7 | HIPS | 80 | — | 0 | Al flake | 20 | 0 | 8 | 0 | 0 |
| 8 | " | " | — | 0 | " | " | 0 | 0 | 8 | 0 |
| 9 | " | 70 | — | 0 | " | 15 | 15 | 8 | 10 | 0 |
| 10 | Mixture (1) | " | — | 0 | " | " | " | 10 | 15 | 0 |
| 11 | " | " | — | 0 | " | " | " | 0 | 0 | 10 |

[Note][1]: % by volume
[2]: parts by weight per 100 parts by weight (total) of the styrene-based resin(s), the Aluminum component and the carbon black.

TABLE 4

| Example No. | Flame[1)] Resistance | Volume Resistivity ($\Omega \cdot cm$) | Electromagnetic Attenuation amount (dB) |
|---|---|---|---|
| 27 | V-0 | $10^2$ | 17 |
| 28 | " | $10^1$ | 19 |
| 29 | " | $10^2$ | 15 |
| 30 | " | $10^2$ | 17 |
| 31 | " | $10^1$ | 17 |
| 32 | " | $10^2$ | 16 |
| 33 | " | $10^2$ | 14 |
| 34 | " | $10^1$ | 23 |
| 35 | " | $10^0$ | 28 |
| 36 | " | $10^0$ | 36 |
| 37 | " | $10^0$ | 33 |
| 38 | " | $10^0$ | 25 |
| 39 | " | $10^0$ | 27 |
| 40 | " | $10^0$ | 29 |
| Comparative Example 7 | combustion | $10^0$ | 16 |
| 8 | V-1 | $10^0$ | 17 |
| 9 | " | $10^0$ | 34 |
| 10 | " | $10^0$ | 34 |
| 11 | V-2 | $10^0$ | 36 |

[Note][1)]: determined by Underwriter's Laboratories (UL) method No. 94 in 1/8 inch thickness.

It is apparent from the results in Table 4 that by the addition of the flame retardants the styrene-based resin composition of the invention has not only excellent electromagnetic wave-shielding properties but also excellent flame resistance.

The styrene-based resin composition obtained in Examples 2, 5, 22, 25, 29 and 35 and Comparative Example 3 were molded to prepare test pieces, and the Izod impact strength, tensile strength, bending strength and Young's modulus in flexure of the test pieces were measured. The results are shown in Table 5.

TABLE 5

| Example No. | Izod impact strength[1)] (kg · cm/cm) | Tensile strength (kg/cm²) | Bending strength (kg/cm²) | Young's modulus in flexure (kg/cm²) |
|---|---|---|---|---|
| 2 | 8.5 | 210 | 490 | 25,500 |
| 5 | 15.0 | 230 | 250 | 18,300 |
| 22 | 4.8 | 270 | 370 | 26,000 |
| 25 | 5.0 | 180 | 380 | 21,000 |
| 29 | 1.2 | 280 | 320 | 22,000 |
| 35 | 8.0 | 190 | 310 | 19,800 |
| Comparative Example 3 | 9.3 | 230 | 450 | 23,500 |

[Note][1)]: notched

A molded article as shown in Fig. 2 was produced by means of an injection molding machine (preset temperature: 230°C; molding pressure: 650 tons) using the pellet prepared in each Example.

This molded article was a rectangular box-like product having a depth of 100 mm, a width of 120 mm, a length of 290 mm and an average thickness of 3 mm.

The impact resistance of each molded article was measured according to UL-114, safety specification 53.24—i.e., a steel ball having a weight of 1.18 pounds and a diameter of 2 inches was allowed to drop on the surface of a test specimen (the back surface of the bottom of the box shown in fig. 2) from a height of 1.3 m, and the state in which the surface was cracked or broken down was examined. There were neither cracking nor breakdown observed in the obverse and reverse sides of each molded article.

A housing (length: 100 mm; width: 260 mm; depth: 370 mm) for a printer was produced by means of an injection molding machine as using the pellets prepared in Example 25 and Comparative Example 3, respectively.

The radiation field strength of the printer housing was measured according to the radiation radio noise testing method as prescribed in FCC (Federal Communication Committee), Document No. 20780 over a radiation frequency range of from 30 to 1,000 MHz. The distance between the sample and the antenna was set at 3 m. The results are shown in Fig. 3. In the figure, A (solid line) indicates the results for the printer housing (A) using the pellet of the Example 25 and B (dotted line) indicates the results for the printer housing (B) using the pellet of Comparative Example 3. As apparent from the figure, the field strength in the printer housing (A) is small over a high frequency region (MHz region) compared with that in the printer housing (B).

Therefore, it can be seen that the styrene-based resin composition of the invention has not only improved electromagnetic wave-shielding properties but also excellent mechanical strength.

**Claims for the Contracting States: DE FR GB IT NL**

1. A styrene-based resin composition comprising:

(A) 40 to 90% by volume of a styrene-based resin component comprising a styrene-based resin having at least 5% by weight of styrene, and 0 to 40% by weight of a rubber like material wherein the styrene-based resin is a styrene homopolymer, a styrene copolymer which includes at most 40% by weight of a double bond-containing organic compound, or a graft-polymer of at least one rubber-like material selected from the group consisting of a butadiene-based rubber, an acrylic acid ester-based rubber, an ethylene/propylene-based rubber and a chlorinated polyethylene-based rubber with styrene alone or a mixture of styrene and at least one vinyl compound selected from the group consisting of acrylonitrile and methyl methacrylate; and

(B) 10 to 60% by volume of an aluminum component selected from the group consisting of aluminum and aluminum alloy in a powdery, fibrous or flaky form.

2. A styrene-based resin composition as claimed in Claim 1, which further comprises (C) an electrically conductive carbon black wherein the proportions of the aluminum component and the carbon black are from 5 to 50% by volume, respectively, provided that the total proportion of the aluminum component and the carbon black is from 10 to 60% by volume.

3. A styrene-based resin composition as claimed in Claim 2, which further comprises (D) a halogen-containing organic compound and an antimony oxide wherein the proportions of the halogen-containing organic compound and the antimony oxide are at least 5 parts by weight, respectively, per 100 parts by weight of the total amount of the styrene-based resin component, the aluminum component and the carbon black, provided that the total proportion of the halogen-containing organic compound and the antimony oxide is from 10 to 45 parts by weight.

4. A styrene-based resin composition as claimed in Claim 3, which further comprises (E) a hydrous inorganic substance in the proportion of 50 parts by weight or less per 100 parts by weight of the total amount of the styrene-based resin component, the aluminum component and the carbon black, provided that the proportion of the hydrous inorganic substance is at least 5 parts by weight per 100 parts by weight of the carbon black.

5. A styrene-based resin composition as claimed in claim 1, 2, 3 or 4, wherein the styrene-based resin has a molecular weight of 10,000 to 1,000,000.

6. A styrene-based resin composition as claimed in Claim 1, 2, 3, 4 or 5, wherein the aluminum component is a flaky aluminum having a thickness of 0.1 mm or less and a surface area of from 0.1×0.1 mm to 5×5 mm.

7. A styrene-based resin composition as claimed in Claim 2, 3, 4 or 5, wherein the electrically conductive carbon black has a specific surface area of 20 to 1,800 $m^2/g$.

8. A styrene-based resin composition as claimed in Claim 3, 4 or 5, wherein the halogen-containing organic compound has a molecular weight of from 500 to 5,000 and a decomposition initiating temperature or a boiling point of at least 200°C.

9. A styrene-based resin composition as claimed in claim 3, 4 or 5, wherein the antimony oxide has an average particle size of from 0.1 to 100 µm.

10. A styrene-based resin composition as claimed in Claim 4 or 5, wherein the hydrous inorganic substance has a bound water content of from 10 to 80% by weight and is capable of releasing water at 150 to 500°C.

**Claims for the Contracting State: BE**

1. A styrene-based resin composition comprising:

(A) 40 to 90% by volume of a styrene-based resin component comprising a styrene-based resin having at least 5% by weight of styrene, and 0 to 40% by weight of a rubber like material; and

(B) 10 to 60% by volume of an aluminum component selected from the group consisting of aluminum and aluminum alloy in a powdery, fibrous or flaky form.

2. A styrene-based resin composition as claimed in Claim 1, which further comprises (C) an electrically conductive carbon black wherein the proportions of the aluminum component and the carbon black are from 5 to 50% by volume, respectively, provided that the total proportion of the aluminum component and the carbon black is from 10 to 60% by volume.

3. A styrene-based resin composition as claimed in Claim 2, which further comprises (D) a halogen-containing organic compound and an antimony oxide wherein the proportions of the halogen-containing organic compound and the antimony oxide are at least 5 parts by weight, respectively, per 100 parts by weight of the total amount of the styrene-based resin component, the aluminum component and the carbon black, provided that the total proportion of the halogen-containing organic compound and the antimony oxide is from 10 to 45 parts by weight.

4. A styrene-based resin composition as claimed in Claim 3, which further comprises (E) a hydrous inorganic substance in the proportion of 50 parts by weight or less per 100 parts by weight of the total amount of the styrene-based resin component, the aluminum component and the carbon black, provided that the proportion of the hydrous inorganic substance is at least 5 parts by weight per 100 parts by weight of the carbon black.

5. A styrene-based resin composition as claimed in Claim 1, 2, 3 or 4, wherein the styrene-based resin has a molecular weight of 10,000 to 1,000,000.

6. A styrene-based resin composition as claimed in Claim 1, 2, 3, 4 or 5, wherein the styrene-based resin is a polymer selected from the group consisting of a styrene homopolymer and a styrene copolymer which includes at most 40% by weight of a double bond-containing organic compound.

7. A styrene-based resin composition as claimed in Claim 1, 2, 3, 4, or 5, wherein the styrene-based resin is a graft-polymer of at least one rubber-like material selected from the group consisting of a butadiene-based rubber, an acrylic acid ester-based rubber, an ethylene/propylene-based rubber and a chlorinated polyethylene-based rubber with styrene alone or a mixture of styrene and at least one vinyl compound selected from the group consisting of acrylonitrile and methyl methacrylate.

8. A styrene-based resin composition as claimed in Claim 1, 2, 3, 4, or 5, wherein the styrene-based resin is a mixture of a polyphenylene ether and at least one polymer selected from the group consisting of a styrene homopolymer and a styrene copolymer which includes at most 40% by weight of a double-bond containing organic compound.

9. A styrene-based resin composition as claimed in Claim 1, 2, 3, 4 or 5 to 8, wherein the aluminum component is a flaky aluminum having a thickness of 0.1 mm or less and a surface area of from 0.1×0.1 mm to 5×5 mm.

10. A styrene-based resin composition as claimed in Claim 2, 3, 4 or 5 to 9, wherein the electrically conductive carbon black has a specific surface area of 20 to 1,800 $m^2/g$.

11. A styrene-based resin composition as claimed in Claim 3, 4 or 5 to 10, wherein the halogen-containing organic compound has a molecular weight of from 500 to 5,000 and a decomposition initiating temperature or a boiling point of at least 200°C.

12. A styrene-based resin composition as claimed in Claim 3, 4 or 5 to 10, wherein the antimony oxide has an average particle size of from 0.1 to 100 µm.

13. A styrene-based resin composition as claimed in Claim 4 or 5 to 12, wherein the hydrous inorganic substance has a bound water content of from 10 to 80% by weight and is capable of releasing water at 150 to 500°C.

14. A styrene-based resin composition as claimed in Claim 7, wherein the styrene-based resin is a graft-polymer of said at least one rubber-like material with said mixture.

**Patentansprüche für die Vertragsstaaten: DE FR GB IT NL**

1. Harzzusammensetzung auf Styrol-Basis mit:

(A) 40—90 Vol.-% einer Harzkomponente auf Styrol-Basis mit einem Harz auf Styrol-Basis, das wenigstens 5 Gew.-% Styrol und 0—40 Gew.-% eines gummiähnlichen Materials enthält, wobei das Harz auf Styrol-Basis ein Styrolhomopolymer, ein Styrolcopolymer mit höchstens 40 Gew.-% einer eine Doppelbindung enthaltenden organischen Verbindung oder ein Propfpolymer ist aus mindestens einem gummiähnlichen Material, das ein Gummi auf Butadien-Basis, ein Gummi auf Acrylsäureester-Basis, ein Gummi auf Ethylen/Propylen-Basis oder ein Gummi auf CPE-Basis ist, mit Styrol allein oder einem Gemisch aus Styrol und wenigstens einer Vinylverbindung, die Acrylnitril oder Methylmethacrylat ist; und

(B) 10—60 Vol.-% einer Aluminiumkomponente, die Aluminium oder Aluminiumlegierung ist, in Pulver-, Faser- oder Flockenform.

2. Harzzusammensetzung auf Styrol-Basis nach Anspruch 1, ferner umfassend (C) elektrisch leitenden Ruß, wobei die Anteile an Aluminiumkomponente bzw. Ruß zwischen 5 und 50 Vol.-% betragen mit der Maßgabe, daß der Gesamtanteil an Aluminiumkomponente und Ruß zwischen 10 und 60 Vol.-% liegt.

3. Harzzusammensetzung auf Styrol-Basis nach Anspruch 2, ferner umfassend (D) eine halogenhaltige organische Verbindung und ein Antimonoxid, wobei die Anteile an halogenhaltiger organischer Verbindung bzw. Antimonoxid wenigstens 5 Gewichtsteile je 100 Gewichtsteilen der Gesamtmenge an Harzkomponente auf Styrol-Basis, Aluminiumkomponente und Ruß betragen mit der Maßgabe, daß der Gesamtanteil an halogenhaltiger organischer Verbindung und Antimonoxid zwischen 10 und 45 Gewichtsteilen liegt.

4. Harzzusammensetzung auf Styrol-Basis nach Anspruch 3, ferner umfassend (E) eine wasserhaltige anorganische Substanz im Anteil von 50 Gewichtsteilen oder weniger je 100 Gewichtsteilen der Gesamtmenge an Harzkomponente auf Styrol-Basis, Aluminiumkomponente und Ruß mit der Maßgabe, daß der Anteil an wasserhaltiger anorganischer Substanz wenigstens 5 Gewichtsteile je 100 Gewichtsteilen an Ruß beträgt.

5. Harzzusammensetzung auf Styrol-Basis nach Anspruch 1, 2, 3 oder 4, wobei das Harz auf Styrol-Basis ein Molekulargewicht zwischen 10.000 und 1.000.000 hat.

6. Harzzusammensetzung auf Styrol-Basis nach Anspruch 1, 2, 3, 4 oder 5, wobei die Aluminiumkomponente ein flockenförmiges Aluminium mit einer Dicke von 0.1 mm oder weniger und einer Oberfläche zwischen 0.1×0.1 mm und 5×5 mm ist.

7. Harzzusammensetzung auf Styrol-Basis nach Anspruch 2, 3, 4 oder 5, wobei der elektrisch leitende Ruß eine spezifische Oberfläche von 20 bis 1.800 $m^2/g$ hat.

8. Harzzusammensetzung auf Styrol-Basis nach Anspruch 3, 4 oder 5, wobei die halogenhaltige organische Verbindung ein Molekulargewicht zwischen 500 und 5.000 und eine Zersetzungs-Auslösungstemperatur oder einen Siedepunkt von wenigstens 200°C hat.

9. Harzzusammensetzung auf Styrol-Basis nach Anspruch 3, 4 oder 5, wobei das Antimonoxid eine mittlere Teilchengröße zwischen 0.1 und 100 µm hat.

10. Harzzusammensetzung auf Styrol-Basis nach Anspruch 4 oder 5, wobei die wasserhaltige anorganische Substanz zwischen 10 und 80 Gew.-% gebundenes Wasser enthält und bei 150 bis 500°C Wasser freisetzen kann.

**Patentansprüche für den Vertragsstaat: BE**

1. Harzzusammensetzung auf Styrol-Basis mit:

(A) 40—90 Vol.-% einer Harzkomponente auf Styrol-Basis mit einem Harz auf Styrol-Basis, das wenigstens 5 Gew.-% Styrol und 0—40 Gew.-% eines gummiähnlichen Materials enthält, und

(B) 10—60 Vol.-% einer Aluminiumkomponente, die Aluminium oder Aluminiumlegierung ist, in Pulver-, Faser- oder Flockenform.

2. Harzzusammensetzung auf Styrol-Basis nach Anspruch 1, ferner umfassend (C) elektrisch leitenden Ruß, wobei die Anteile an Aluminiumkomponente bzw. Ruß zwischen 5 und 50 Vol.-% betragen mit der Maßgabe, daß der Gesamtanteil an Aluminiumkomponente und Ruß zwischen 10 und 60 Vol.-% liegt.

3. Harzzusammensetzung auf Styrol-Basis nach Anspruch 2, ferner umfassend (D) eine halogenhaltige organische Verbindung und ein Antimonoxid, wobei die Anteile an halogenhaltiger organischer Verbindung bzw. Antimonoxid wenigstens 5 Gewichtsteile je 100 Gewichtsteilen der Gesamtmenge an Harzkomponente auf Styrol-Basis, Aluminiumkomponente und Ruß betragen mit der Maßgabe, daß der Gesamtanteil an halogenhaltiger organischer Verbindung und Antimonoxid zwischen 10 und 45 Gewichtsteilen liegt.

4. Harzzusammensetzung auf Styrol-Basis nach Anspruch 3, ferner umfassend (E) eine wasserhaltige anorganische Substanz im Anteil von 50 Gewichtsteilen oder weniger je 100 Gewichtsteilen der Gesamtmenge an Harzkomponente auf Styrol-Basis, Aluminiumkomponente und Ruß mit der Maßgabe, daß der Anteil an wasserhaltiger anorganischer Substanz wenigstens 5 Gewichtsteile je 100 Gewichtsteilen an Ruß beträgt.

5. Harzzusammensetzung auf Styrol-Basis nach Anspruch 1, 2, 3 oder 4, wobei das Harz auf Styrol-Basis ein Molekulargewicht zwischen 10.000 und 1.000.000 hat.

6. Harzzusammensetzung auf Styrol-Basis nach Anspruch 1, 2, 3, 4 oder 5, wobei das Harz auf Styrol-Basis ein Polymer ist, das ein Styrolhomopolymer oder ein Styrolcopolymer ist, mit höchstens 40 Gew.-% einer eine Doppelbindung enthaltenden organischen Verbindung.

7. Harzzusammensetzung auf Styrol-Basis nach Anspruch 1, 2, 3, 4 oder 5, wobei das Harz auf Styrol-Basis ein Pfropfpolymer aus wenigstens einem gummiähnlichen Material ist, das ein Gummi auf Butadien-Basis, ein Gummi auf Acrylsäureester-Basis, ein Gummi auf Ethylen/Propylen-Basis oder ein Gummi auf CPE-Basis ist, mit Styrol allein oder einem Gemisch aus Styrol und wenigstens einer Vinylverbindung, die Acrylnitril oder Methylmethacrylat ist.

8. Harzzusammensetzung auf Styrol-Basis nach Anspruch 1, 2, 3, 4 oder 5, wobei das Harz auf Styrol-Basis ein Gemisch aus einem Polyphenylenether und wenigstens einem Polymer ist, das ein Styrolhomopolymer oder ein Styrolcopolymer ist, mit höchstens 40 Gew.-% einer eine Doppelbindung enthaltenden organischen Verbindung.

9. Harzzusammensetzung auf Styrol-Basis nach Anspruch 1, 2, 3, 4, oder 5 bis 8, wobei die Aluminiumkomponente ein flockenförmiges Aluminium mit einer Dicke von 0.1 mm oder weniger und einer Oberfläche zwischen 0.1×0.1 mm und 5×5 mm ist.

10. Harzzusammensetzung auf Styrol-Basis nach Anspruch 2, 3, 4 oder 5 bis 9, wobei der elektrisch leitende Ruß eine spezifische Oberfläche von 20 bis 1.800 $m^2/g$ hat.

11. Harzzusammensetzung auf Styrol-Basis nach Anspruch 3, 4 oder 5 bis 10, wobei die halogenhaltige organische Verbindung ein Molekulargewicht zwischen 500 und 5.000 und eine Zersetzungs-Auslösungstemperatur oder einen Siedepunkt von wenigstens 200°C hat.

12. Harzzusammensetzung auf Styrol-Basis nach Anspruch 3, 4 oder 5 bis 10, wobei das Antimonoxid eine mittlere Teilchengröße zwischen 0.1 und 100 µm hat.

13. Harzzusammensetzung auf Styrol-Basis nach Anspruch 4 oder 5 bis 12, wobei die wasserhaltige anorganische Substanz zwischen 10 und 80 Gew.-% gebundenes Wasser enthält und bei 150 bis 500°C Wasser freisetzen kann.

14. Harzzusammensetzung auf Styrol-Basis nach Anspruch 7, wobei das Harz auf Styrol-Basis ein Pfropfpolymer des wenigstens einen gummiähnlichen Materials mit dem Gemisch ist.

**Revendications pour les Etats Contractants: DE FR GB IT NL**

1. Composition de résine à base de styrène, comprenant:

(A) 40 à 90% en volume d'un composant résine à base de styrène, comprenant une résine à base de styrène contenant au moins 5% en poids de styrène, et 0 à 40% en poids d'une matière analogue à du caoutchouc, la résine à base de styrène étant un homopolymère de styrène, un copolymère de styrène qui comprend au maximum 40% en poids d'un composé organique contenant une double liaison, ou un polymère greffé d'au moins une matière analogue à du caoutchouc, choisie dans l'ensemble consistant en un caoutchouc à base de butadiène, un caoutchouc à base d'un ester d'acide acrylique, un caoutchouc à base d'éthylène/propylène et un caoutchouc à base de polyéthylène chloré avec du styrène seul ou avec un mélange de styrène et d'au moins un composé vinylique, choisi dans l'ensemble consistant en l'acrylonitrile et le méthacrylate de méthyle; et

(B) 10 à 60% en volume d'un composant aluminium choisi dans l'ensemble constitué par l'aluminium et un alliage d'aluminium sous forme pulvérulente, fibreuse ou paillettes.

2. Composition de résine à base de styrène selon la revendication 1, qui comprend en outre (C) un noir de carbone conducteur de l'électricité, dans laquelle les proportions du composant aluminium et du noir de carbone vont de 5 à 50% en volume, respectivement, à la condition que la proportion totale du composant aluminium et du noir de carbone se situe entre 10 et 60% en volume.

3. Composition de résine à base de styrène selon la revendication 2, qui comprend en outre (D) un composé organique contenant l'halogène et un oxyde d'antimoine, dans laquelle les proportions du composé organique contenant de l'halogène et de l'oxyde d'antimoine sont d'au moins 5 parties en poids, respectivement, pour 100 parties en poids de la quantité totale du composant résine à base de styrène, du composant aluminium et du noir de carbone, à la condition que la proportion totale du composé organique contenant de l'halogène et de l'oxyde d'antimoine soit de 10 à 45 parties en poids.

4. Composition de résine à base de styrène selon la revendication 3, qui comprend en outre (E) une substance minérale hydratée, présente en la proportion de 50 parties en poids ou moins pour 100 parties en poids de la quantité totale du composant résine à base de styrène, du composant aluminium et du noir de carbone, à la condition que la proportion de la substance minérale hydratée soit d'au moins 5 parties en poids pour 100 parties en poids du noir de carbone.

5. Composition de résine à base de styrène selon la revendication 1, 2, 3 ou 4, dans laquelle la résine à base de styrène présente un poids moléculaire de 10 000 à 1 000 000.

6. Composition de résine à base de styrène selon la revendication 1, 2, 3, 4 ou 5, dans laquelle le composant aluminium est un aluminium en paillettes ayant une épaisseur de 0,1 mm ou moins et une surface de 0,1×0,1 mm à 5×5 mm.

7. Composition de résine à base de styrène selon la revendication 2, 3, 4 ou 5, dans laquelle le noir de carbone électriquement conducteur a une surface spécifique de 20 à 1 800 $m^2/g$.

8. Composition de résine à base de styrène selon la revendication 3, 4 ou 5, dans laquelle le composé organique contenant de l'halogène possède un poids moléculaire compris entre 500 et 5 000 et une température de début de décomposition ou un point d'ébullition d'au moins 200°C.

9. Composition de résine à base de styrène selon la revendication 3, 4 ou 5, dans laquelle l'oxyde d'antimoine a une dimension particulaire moyenne de 0,1 à 100 µm.

10. Composition de résine à base de styrène selon la revendication 4 ou 5, dans laquelle la substance minérale hydratée a une teneur en eau liée allant de 10 à 80% en poids et est capable de dégager de l'eau à 150 jusqu'à 500°C.

**Revendications pour l'Etat Contractant: BE**

1. Composition de résine à base de styrène, comprenant:

(A) 40 à 90% en volume d'un composant résine à base de styrène, comprenant une résine à base de styrène ayant au moins 5% en poids de styrène et 0 à 40% en poids d'une matière analogue à du caoutchouc; et

(B) 10 à 60% en volume d'un composant aluminium, choisi dans l'ensemble constitué par l'aluminium et un alliage d'aluminium, sous forme pulvérulente, fibreuse ou de paillettes.

2. Composition de résine à base de styrène selon la revendication 1, qui comprend en outre (C) un noir de carbone conducteur de l'électricité, dans laquelle les proportions du composant aluminium et du noir de carbone vont de 5 à 50% en volume, respectivement, à la condition que la proportion totale du composant aluminium et du noir de carbone se situe entre 10 et 60% en volume.

3. Composition de résine à base de styrène selon la revendication 2, qui comprend en outre, (D) un composé organique contenant de l'halogène et un oxyde d'antimoine, dans laquelle les proportions du composé organique contenant de l'halogène et de l'oxyde d'antimoine sont d'au moins 5 parties en poids, respectivement, pour 100 parties en poids de la quantité totale du composant résine à base de styrène, du composant aluminium et du noir de carbone, à la condition que la proportion totale du composé organique contenant de l'halogène et de l'oxyde d'antimoine soit de 10 à 45 parties en poids.

4. Composition de résine à base de styrène selon la revendication 3, qui comprend en outre (E) une substance minérale hydratée, présente en la proportion de 50 parties en poids ou moins pour 100 parties en poids de la quantité totale du composant résine à base de styrène, du composant aluminium et du noir de carbone, à la condition que la proportion de la substance minérale hydratée soit d'au moins 5 parties en poids pour 100 parties en poids du noir de carbone.

5. Composition de résine à base de styrène selon la revendication 1, 2, 3 ou 4, dans laquelle la résine à base de styrène présente un poids moléculaire de 10 000 à 1 000 000.

6. Composition de résine à base de styrène selon la revendication 1, 2, 3, 4 ou 5, dans laquelle la résine à base de styrène est un polymère choisi dans l'ensemble constitué par un homopolymère du styrène et un copolymère de styrène qui comprend au maximum 40% en poids d'un composé organique contenant une double liaison.

7. Composition de résine à base de styrène selon la revendication 1, 2, 3, 4 ou 5, dans laquelle la résine à base de styrène est un polymère greffé d'au moins une matière analogue à du caoutchouc, choisie dans l'ensemble constitué par un caoutchouc à base de butadiène, un caoutchouc à base d'un ester de l'acide acrylique, un caoutchouc à base d'éthylène/propylène et un caoutchouc à base de polyéthylène chloré, avec du styrène seul ou avec un mélange de styrène et d'au moins un composé vinylique choisi dans l'ensemble constitué par l'acrylonitrile et le méthacrylate de méthyle.

8. Composition de résine à base de styrène selon la revendication 1, 2, 3, 4 ou 5, dans laquelle la résine à base de styrène est un mélange d'un poly(éther-oxyde de phénylène) et d'au moins un polymère choisi dans l'ensemble constitué par un homopolymère du styrène et un copolymère du styrène qui comporte au maximum 40% en poids d'un composé organique contenant une double liaison.

9. Composition de résine à base de styrène selon la revendication 1, 2, 3, 4 ou 5 à 8, dans laquelle le composant aluminium est un aluminium en paillettes ayant une épaisseur de 0,1 mm ou moins et une surface de 0,1×0,1 mm à 5×5 mm.

10. Composition de résine à base de styrène selon la revendication 2, 3, 4 ou 5 à 9, dans laquelle le noir de carbone électriquement conducteur a une surface spécifique de 20 à 1 800 $m^2/g$.

11. Composition de résine à base de styrène selon la revendication 3, 4 ou 5 à 10, dans laquelle le composé organique contenant de l'halogène a un poids moléculaire de 500 à 5 000 et une température de début de décomposition ou un point d'ébullition d'au moins 200°C.

12. Composition de résine à base de styrène, selon la revendication 3, 4 ou 5 à 10, dans laquelle l'oxyde d'antimoine a une dimension particulaire moyenne de 0,1 à 100 µm.

13. Composition de résine à base de styrène selon la revendication 4 ou 5 à 12, dans laquelle la substance minérale hydratée a une teneur en eau liée de 10 à 80% en poids et est capable de dégager l'eau à 150 jusqu'à 500°C.

14. Composition de résine à base de styrène selon la revendication 7, dans laquelle la résine à base de styrène est un polymère greffé de ladite au moins une matière analogue à du caoutchouc avec ledit mélange.

FIG.1

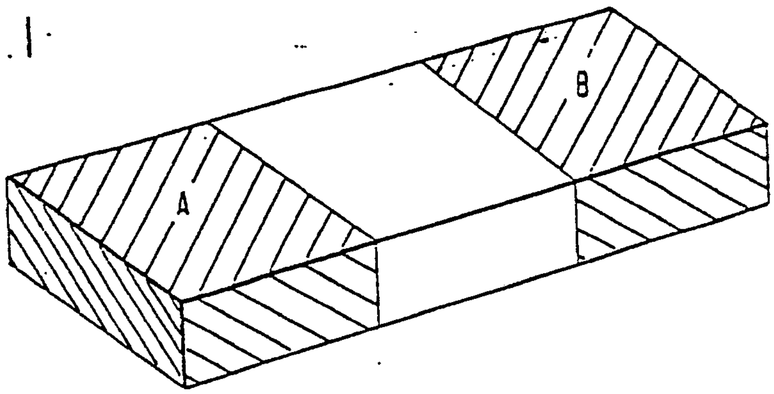


FIG. 2

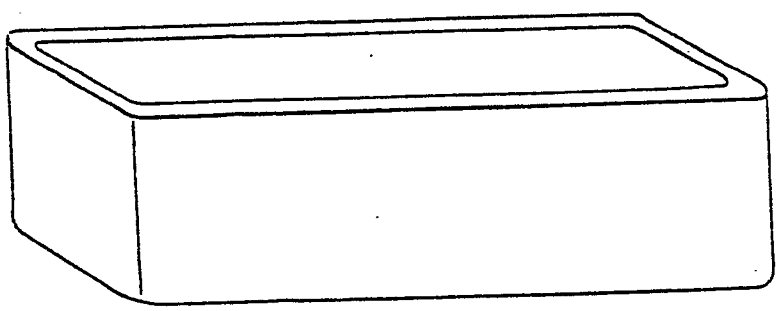

FIG. 3

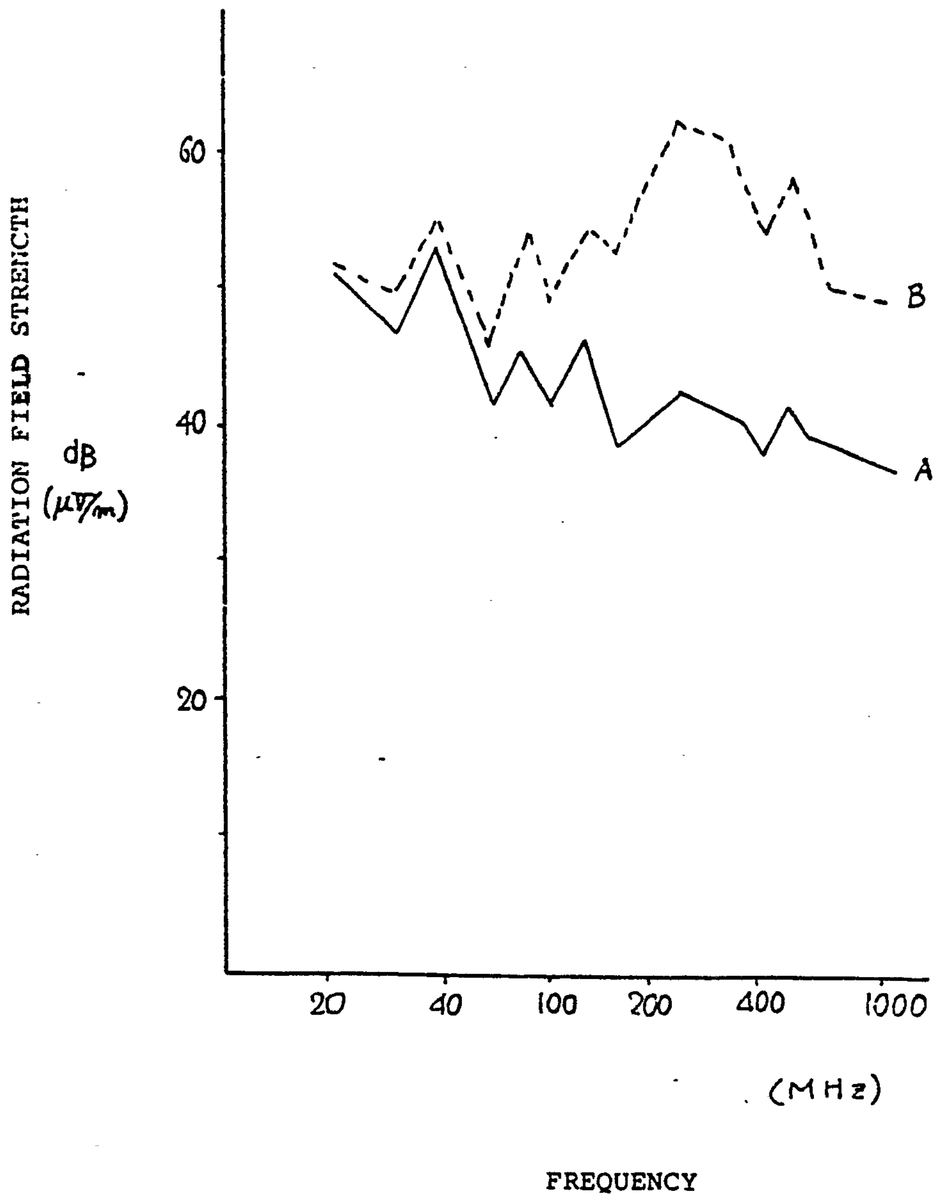
RADIATION FIELD STRENGTH
dB
(μV/m)
60
40
20
B
A
20
40
100
200
400
1000
(MHz)
FREQUENCY